# EUROPÄISCHE PATENTSCHRIFT

(11) **EP 1 673 567 B1**
(45) Veröffentlichungstag und Bekanntmachung des Hinweises auf die Patenterteilung: **25.04.2007**
(21) Anmeldenummer: 04789993.5
(22) Anmeldetag: 14.10.2004
(51) Int. Cl.: F16L 3/26, H02G 11/00

(54) **LEITUNGSFÜHRUNGSEINRICHTUNG**
LINE GUIDE DEVICE
DISPOSITIF DE GUIDAGE DE CONDUITES

(30) Priorität: 15.10.2003 DE 20316068 U; 08.04.2004 DE 202004005848 U
(43) Veröffentlichungstag der Anmeldung: 28.06.2006
(73) Patentinhaber: igus GmbH, 51147 Köln (DE)
(72) Erfinder: BLASE, Frank, 51429 Bergisch Gladbach (DE)
(74) Vertreter: Gudat, Axel
(86) Internationale Anmeldenummer: PCT/DE2004/002291
(87) Internationale Veröffentlichungsnummer: WO 2005/040659

(56) Entgegenhaltungen:
- EP-A- 1 138 555
- EP-B- 0 966 624
- US-B1- 6 354 070

## Beschreibung

Die Erfindung betrifft eine Leitungsführungseinrichtung zur Führung von Leitungen, bestehend aus einer Vielzahl gelenkig miteinander verbundener Glieder, die jeweils ein Bodenteil, gegenüberliegende Seitenwände und zumindest ein Deckelelement unter Ausbildung eines Kanals zur Aufnahme von Leitungen aufweisen, wobei die Vielzahl der Glieder unter Ausbildung eines durchgehenden Stranges einstückig aneinander angeformt sind, wobei die Leitungsführungseinrichtung unter Ausbildung eines Untertrums, eines Umlenkbereichs und eines Obertrums anordenbar ist, und wobei das Bodenteil und beide gegenüberliegenden Seitenwände der Glieder als unter bestimmungsgemäßer Belastung im Wesentlichen starre U-Profile einstückig ausgeformt sind und wobei das Deckelelement des jeweiligen Gliedes an zumindest einer Seitenwand desselben angeformt und gegenüber der Seitenwand lageveränderlich ausgebildet ist und in eine das Glied verschließende und eine den Bereich zwischen den gegenüberliegenden Seitenwänden zumindest im Wesentlichen freigebende Stellung überführbar ist.

Derartige einstückig ausgebildete Leitungsführungseinrichtungen, die sich über eine Vielzahl gelenkig miteinander verbundener Glieder erstrecken, werden oftmals als Extrusionsprofile hergestellt, wobei zur Ausbildung der einzelnen Glieder die Seitenwände des Extrusionsprofils bearbeitet werden, beispielsweise durch Ausbildung von Einschnitten. Derartige Leitungsführungseinrichtungen sind zumeist vergleichsweise flexibel, auch um eine leichte Anordnung der zu führenden Leitungen in dem Kanal der Leitungsführungseinrichtung zu ermöglichen. Dies bedingt jedoch andererseits eine vergleichsweise geringe Stabilität der Glieder, insbesondere bei Torsionsbeanspruchung oder seitlich einwirkenden Kräften. Ferner ist eine komplexe Strukturierung der Glieder der Extrusionsprofile nur sehr aufwändig oder gar nicht möglich, wodurch der Anpassung der Leitungsführungseinrichtung an unterschiedliche Anforderungen oder andere Funktionalitäten Grenzen gesetzt sind.

Ferner sind Leitungsführungseinrichtungen bekannt geworden, welche aus Kunststoff im Wesentlichen in einer etwa ebenen Anordnung einteilig gespritzt hergestellt werden. Das Bodenteil, die Seitenwände und das Deckelelement sind hierbei jeweils durch Gelenkelemente in Art von Filmscharnieren miteinander verbunden. Hierdurch kann zwar eine Leitungsführungseinrichtung kostengünstig hergestellt werden, die Leitungsführungseinrichtung ist jedoch insgesamt bei Einwirkung äußerer Kräfte, die auch bei einer Fahrbewegung der Leitungsführungseinrichtung auf diese ausgeübt werden, vergleichsweise instabil und daher nicht für alle Anwendungszwecke geeignet. Dies gilt insbesondere dann, wenn die Leitungsführungseinrichtung nur sehr geringe Querschnittsausdehnungen aufweist, was für viele Anwendungszwecke wie beispielsweise im Automobilbereich, für Drucker oder dergleichen notwendig ist.

Die EP 1 138 555 B1 beschreibt eine Vorrichtung zum Tragen und Führen eines Drahtbündels, welche fest mit einem Teil wie z. B. dem Sitzteil eines Vordersitzes für Kraftfahrzeuge verbunden ist und gegenüber einem Träger beweglich ist und die ein biegsames, gekrümmtes Band in Form einer Rinne zum Aufnehmen des Drahtbündels enthält, das sich unter dem beweglichen Teil in einer annähernd senkrecht zum Träger verlaufenden Ebene befindet und mit seinem unteren Ende fest mit einer Tragplatte verbunden ist, die am Träger befestigbar ist, wobei Befestigungsmittel zum Einschießen des Drahtbündels in dem rinnenförmigen Band vorgesehen sind, so dass Drahtbündel und Band in zumindest zwei orthogonalen Richtungen, die senkrecht zum Träger bzw. parallel zu diesem verlaufen, verformbar sind.

Der Erfindung liegt daher die Aufgabe zugrunde, eine kostengünstig herstellbare Leitungsführungseinrichtung bereitzustellen, die auch bei vergleichsweise kleinen Querschnitten der Glieder vielfältig einsetzbar ist.

Diese Aufgabe wird durch eine Leitungsführungseinrichtung mit den Merkmalen des Anspruchs 1 gelöst. Die Glieder sind somit als im Wesentlichen starre U-Profile hergestellt, die in einem einstückig ausgebildeten Strang der Leitungsführungseinrichtung vorliegen, so dass die Leitungsführungseinrichtung auch bei vergleichsweise kleinen Gliedern eine hohe Stabilität aufweist. Durch die hohe Stabilität der Glieder und deren einstückige Anformung aneinander kann auch eine Leitungsführungseinrichtung mit sehr kleinem Gliederquerschnitt eine hohe Laufruhe und gleichförmige Bewegung aufweisen. Die Glieder der Leitungsführungseinrichtung können hierbei eine Breite und/oder Höhe von ≤ 2 cm, ≤ 1,5 cm oder ≤ 0,5-1 cm aufweisen. Es versteht sich daher, dass die unter bestimmungsgemäßer Belastung im Wesentlichen starren U-Profile der Glieder dennoch gegebenenfalls manuell oder unter erhöhten Belastungen in zumindest gewissem Ausmaß deformierbar sein können. Andererseits wird bei derart kleinen Gliedern durch die aufgrund der Anordnung einer Gelenkverbindung lageveränderlichen Deckelelemente eine leichte Einführung von Leitungen in den Kanal der Leitungsführungseinrichtung ermöglicht und zudem eine Belastung der Glieder oder der an diesen einstückig angeformten Gelenkbereichen vermieden. Es versteht sich, dass die Gelenkverbindung der Deckelelemente unmittelbar an dem Übergangsbereich der Deckelemente mit der jeweiligen Seitenwand angeordnet sein kann, die Gelenkverbindung kann jedoch auch in einem von dem Übergangsbereich in Richtung auf das Deckelelement oder die Seitenwand hin verlagerten Bereich vorgesehen sein.

Durch die gelenkig miteinander verbundenen Bodenteile der einstückigen Leitungsführungseinrichtung wird somit ein durchgehendes Band ausgebildet, welches gegebenenfalls günstige Gleitreibungseigenschaften aufweisen kann.

Die Leitungsführungseinrichtung kann beispielsweise über eine Länge von bis zu 30, bis zu 50 oder bis zu 100-150 cm einstückig ausgebildet sein, ohne hierauf beschränkt zu sein.

Vorzugsweise wird die Leitungsführungseinrichtung als über deren gesamte Länge einstückig geformtes Kunststoffteil, insbesondere Spritzgussteil, hergestellt, so dass auch sehr kleine Elemente der Leitungsführungseinrichtung mit komplexen Strukturen hergestellt und die Leitungsführungseinrichtung an vielfältige Anforderungen angepasst werden kann.

Die Gelenkverbindungen der Deckelelemente an den zugeordneten Seitenwänden der jeweiligen Glieder und/oder die Gelenkverbindungen zwischen benachbarten Gliedern, welche eine Verschwenkung der Glieder zueinander ermöglichen, sind jeweils vorzugsweise als Filmscharnier ausgebildet.

Die einstückig hergestellte Leitungsführungseinrichtung kann aus einem Material bestehen, gegebenenfalls können auch in einem Mehrkomponentenverfahren unterschiedliche Werkstoffe verwendet werden, so kann beispielsweise ein durch die gelenkig verbundenen Bodenteile ausgeformtes durchgehende Band und/oder die Deckelelemente und/oder die jeweiligen Gelenkverbindungen aus einem anderen Material bestehen als beispielsweise die Seitenwände der Leitungsführungseinrichtung.

Vorzugsweise sind an den jeweiligen Deckelelementen einstückig angeformte Verschlussmittel vorgesehen, welche mit einem korrespondierenden Verschlussmittel unter Ausbildung einer deckelseitig geschlossenen Leitungsführungseinrichtung lösbar verbindbar sind. Aufgrund der besonders kleinen Glieder der Leitungsführungseinrichtung und der somit geringen Materialstärken ist es von besonderer Bedeutung, dass die Öffnungsrichtungen der Verschlussmittel von einer auf den Deckelelementen bzw. Bodenelementen stehenden normalen Richtung verschieden sind, um so auch bei geringen Materialstärken der Verschlussmittel eine Leitungsführungseinrichtung bereitzustellen, die auch bei Druckausübung der geführten Leitungen auf die Deckelelementinnenseiten die Glieder sicher abschließt.

Ist das jeweilige Deckelelement einstückig ausgebildet, so kann das korrespondierende Verschlussmittel an der Seitenwand des jeweiligen Gliedes angeordnet sein, die der Gelenkverbindung des Deckelelementes gegenüberliegt. Das an der Seitenwand angeformte Verschlusselement kann an der dem Bodenteil gegenüberliegenden Oberseite der Seitenwand ausgebildet sein oder seitlich an der Seitenwand, d.h. an der dem Leitungsführungskanal zugewandten Innenseite oder vorzugsweise an der Außenseite der Seitenwand. Das Deckelelement kann hierbei eine seitenwandumgreifende Lasche aufweisen, die vorzugsweise in nicht kraftbeaufschlagtem Zustand gegenüber dem Deckelelement abgewinkelt oder abwinkelbar ist. Ist das Deckelelement zweiteilig ausgebildet, wobei die beiden Teile an gegenüberliegenden Seitenwänden des jeweiligen Gliedes unter Bereitstellung einer oder zweier Gelenkverbindungen angeformt sind, so können die Verschlusselemente an den beiden Deckelelementteilen, vorzugsweise in den aufeinander zuweisenden Endbereichen derselben, einstückig angeformt sein. Das Verschlusselement kann insbesondere als rastend festlegbare Lasche ausgeführt sein.

An benachbarten Gliedern sind miteinander korrespondierende Anschläge vorgesehen, die in gestreckter Anordnung der Leitungsführungseinrichtung miteinander zur Anlage kommen können. Hierbei kann die Leitungsführungseinrichtung im Wesentlichen in linear gestreckter Lage vorliegen, eine gewisse Vorspannung aufweisen, so dass erst unter Druckbelastung auf die Bodenteiloberseiten, beispielsweise durch in der Leitungsführungseinrichtung angeordnete Leitungen sich eine gestreckte Lage einstellt. Oftmals fungieren die auf das benachbarte Glied hinzuweisenden Stirnseiten der Seitenwände der Glieder als Anschlagflächen. Dies ist bei Gliedern mit vergleichsweise kleinem Querschnitt und damit geringer Breite der Seitenwände jedoch teilweise unzweckmäßig. Vorzugsweise ist daher zumindest einer der korrespondierenden Anschläge benachbarter Glieder an einem Deckelelement vorgesehen. Ein korrespondierender Anschlag des benachbarten Gliedes kann beispielsweise ebenfalls an einem Deckelelement oder an einer Innenseite, Außenseite und/oder dem Bodenelement des Gliedes abgewandten Oberseite der Seitenwand angeordnet sein. Die Leitungsführungseinrichtung kann jeweils derart ausgeführt sein, dass das Untertrum auf dem Obertrum ablegbar ist oder dass das Obertrum freihängend ist.

Beispielsweise können die Deckelelemente das benachbarte Glied übergreifende Vorsprünge aufweisen, die an einer Seitenwandoberseite eines benachbarten Gliedes unter Ausbildung eines Anschlages angreifen, beispielsweise in eine nach oben hin geöffnete Ausnehmung der Seitenwand angreifen. Die Anschläge an dem Deckelelement können im Wesentlichen die Breite der Seitenwände des benachbarten Gliedes aufweisen, gegebenenfalls können die Seitenwände auch Querschnittsverbreiterungen aufweisen, die als Anschläge dienen.

Die jeweils korrespondierenden Anschläge benachbarter Glieder, die in Strecklage und/oder Krümmungslage der Leitungsführungseinrichtung wirken und hierbei die Verschwenkstellung der Glieder in der jeweiligen Richtung begrenzen, sind erfindungsgemäß jeweils an beiden Deckelelementen der jeweils benachbarten Glieder angeordnet. Eine Anformung der Anschläge an den Seitenwänden ist hierdurch nicht mehr notwendig. Ferner können die Anschläge in etwa oder exakt auf Höhe der Mittellängsebene der Leitungsführungseinrichtung, d. h. in zumindest in etwa oder genau gleichem Abstand zu den jeweils gegenüberliegenden Seitenwänden eines Gliedes, angeordnet sein, wodurch die Anschläge eine vergleichsweise große Anschlagfläche aufweisen und durch deren mittige Anordnung an der Leitungsführungseinrichtung ein ungleichmäßiges Anschlagverhalten lateral beabstandeter Anschlagpaare vermieden wird.

Vorzugsweise ist der Anschlag als ein von dem jeweiligen Deckelelement vorspringender Bereich ausgebildet, der in gestreckter Anordnung der Leitungsführungseinrichtung auf das benachbarte Glied vorsteht und in Anschlagstellung in eine mit einem Anschlag versehene Ausnehmung eines Deckelelementes und/oder einer Seitenwand des benachbarten Gliedes eingreift. Ein in Strecklage wirkender Anschlag eines Anschlagpaares benachbarter Glieder kann durch eine in Richtung auf das benachbarte Glied hin offene Ausnehmung des jeweiligen Deckelelementes bereitgestellt werden, wobei die Ausnehmung vorzugsweise in Richtung auf das Bodenelement des jeweiligen Gliedes hin zumindest teilweise oder vollständig geschlossen ausgeführt ist. Hierdurch wird verhindert, dass in Anschlagstellung der Anschlag des benachbarten Gliedes in Richtung auf die Bodenplatte des Gliedes hin abrutscht. Gegebenenfalls kann die den Anschlag des benachbarten Gliedes aufnehmende Ausnehmung des Deckelelementes auch nach oben hin zumindest teilweise oder vollständig geschlossen ausgeführt sein.

Alternativ oder zusätzlich sind erfindungsgemäß an den Seitenwänden und/oder Deckelelementen zumindest einiger oder sämtlicher Glieder Laschen einstückig geformt, die ausgehend von einer ersten Position, die beispielsweise der Position der Lasche in der jeweiligen Werkzeugform, beispielsweise einer Spritzgussform, entspricht, mittels welcher die Leitungsführungseinrichtung hergestellt wird, in eine zweite Position überführbar ist, in der sie mit einem Teilbereich eines benachbarten Gliedes überlappt. Hierdurch können überlappende Bereiche benachbarter Glieder bereitgestellt werden, ohne dass bei der Herstellung der Leitungsführungseinrichtung in einem Werkzeug wie einer Spritzgussform überlappende Bereiche der Glieder erzeugt werden müssen, was werkzeugtechnisch zumeist sehr aufwändig ist. Die überlappenden Bereiche können beispielsweise jeweils einen Anschlag eines Anschlagpaares benachbarter Glieder bereitstellen, der in Strecklage und/oder in maximaler Krümmungslage der Leitungsführungseinrichtung wirkt.

Vorzugsweisen die Glieder im Bereich der im wesentlichen starren Seitenwände und der Bodenelemente keine überlappenden Bereiche auf, bis gegebenenfalls die oben genannten lageveränderlichen Laschen.

Vorzugsweise wird der eine Vielzahl von Gliedern aufweisende einstückige Abschnitt der Leitungsführungseinrichtung derart geformt, dass die Deckelelemente jeweils abwechselnd an den gegenüberliegenden Seitenwänden der Glieder angeformt sind.

Vorzugsweise ist an zumindest einigen oder sämtlichen Deckelelementen der Glieder jeweils zumindest ein laschenartiger Bereich angeformt, der mit zumindest einem der jeweils benachbarten Glieder in gestreckter und/oder maximal gekrümmter Anordnung der Leitungsführungseinrichtung überlappende Bereiche ausbildet, wobei an den überlappenden Bereichen der jeweils benachbarten Glieder in der jeweiligen Anschlagstellung wirkende Anschlagelemente angeordnet sind. Insbesondere können an einigen oder sämtlichen Deckelelementen der Glieder jeweils zwei laschenartige Bereiche angeformt sein, die jeweils auf eines der beiden benachbarten Glieder hin vorstehen und mit diesen überlappende Bereiche ausbilden. Die laschenartigen Bereiche schließen sich somit auf Höhe der Gelenkverbindungen an die Deckelelemente an, so dass die Deckelelemente auf Höhe der Laschen eine größere Erstreckung in Leitungsführungslängsrichtung aufweisen als auf Höhe der Gelenkverbindungen mit den Seitenwänden. Die miteinander wechselwirkenden Anschlagpaare benachbarter Glieder können somit an einer von einem Deckelelement vorstehenden Lasche eines ersten und einer entsprechenden vorstehenden Lasche eines zweiten Gliedes angeordnet sein, wodurch insbesondere in Krümmungslage der Leitungsführungseinrichtung wirkende Anschlagpaare bereitgestellt werden können. Es kann auch ein von einem Deckelelement vorstehender laschenartiger Bereich vorgesehen sein, der mit einem Bereich des Deckelelementes des benachbarten Gliedes, welches auf Höhe der entsprechenden Gelenkverbindung angeordnet ist, überlappt. An den beiden derartigen überlappenden Bereichen können insbesondere in Strecklage der Leitungsführungseinrichtung wirkende Anschlagpaare der jeweils benachbarten Glieder angeordnet sein.

Die oben beschriebenen Laschen können die gleiche Biegesteifigkeit in Leitungsführungslängsrichtung aufweisen, wie die Deckelelemente selber, vorzugsweise weisen die Laschen eine höhere Biegesteifigkeit auf, so dass die Leitungsführungseinrichtung leichter unter Ausbildung eines das Obertrum und das Untertrum verbindenden Umlenkbereichs in eine Krümmungslage überführt werden kann. Von den jeweils überlappenden Bereichen benachbarter Deckelelemente kann jeweils einer der Bereiche eine hohe und der andere, vorzugsweise der den Bodenelementen zugewandte Bereich, eine geringe Biegesteifigkeit aufweisen.

Als Anschläge in Strecklage der Leitungsführungseinrichtung können insbesondere die auf das benachbarte Glied zuweisenden Stirnseiten der an den Deckelelementen angeordneten Laschen oder die Stirnseiten der Deckelelemente selber fungieren.

Als Anschläge in Krümmungslage der Leitungsführungseinrichtung sind vorzugsweise an den Deckelelementen und/oder den in Richtung auf das benachbarte Glied an den Deckelelementen angeformten Zapfen vorgesehen, die sich im Wesentlichen quer, vorzugsweise senkrecht, zur Leitungsführungslängsrichtung erstrecken und in korrespondierende Ausnehmungen der Deckelelemente oder der an diesen angeformten vorstehenden Bereichen oder Laschen des benachbarten Gliedes eingreifen. Die Zapfen können quer oder im wesentlichen senkrecht zu den Bodenelementen der Glieder angeordnet sein.

Derartige Zapfen können insbesondere als Druckknopf ausgeführt sein, so dass auch bei einer Biegebeanspruchung der Laschen ein Herausspringen der Zapfen aus den Aufnahmen des benachbarten Gliedes verhindert wird.

Die in Strecklage der Seitenwände jeweils benachbarten Glieder können zumindest über einen Teil oder die gesamte Höhe derselben, welche sich ausgehend von einem Bodenelement bis zu dem Deckelelement erstreckt, voneinander beabstandet sein. Eine derartige Anordnung ist zur Ausbildung weiterer Anschläge oder Ausbildung von Filmscharnieren zur gelenkigen Verbindung der Glieder zweckmäßig, insbesondere bei einer Ausbildung der Leitungsführungseinrichtung als Spritzgussteil. Die Breite der derartigen Spalte zwischen benachbarten Gliedern in Leitungsführungslängsrichtung kann größer/gleich der halben, der einfachen oder der doppelten Seitenwandstärke der jeweiligen Glieder entsprechen.

Zur Bereitstellung eines zusätzlichen oder alternativen Anschlagpaares an benachbarten Gliedern zur Begrenzung des Verschwenkwinkels in Krümmungslage der Leitungsführungseinrichtung kann ein an dem Bodenteil und/oder der Seitenwand zumindest eines oder beider benachbarter Glieder vorstehender Vorsprung vorgesehen sein, der auf das jeweils benachbarte Glied vorsteht und in Krümmungslage mit dem korrespondierenden Anschlag des benachbarten Gliedes zur Anlage bringbar ist. Der vorstehende Bereich und/oder der korrespondierende Anschlagbereich ist vorzugsweise unter Ausbildung eines flächigen Anschlages abgeschrägt. Durch die Bereitstellung dieses Anschlages können die Gelenkverbindungen der einstückig miteinander verbundenen Glieder beim Anschlagen aneinander entlastet und zudem eine exakte definierte Anordnung der Leitungsführungseinrichtung in Krümmungslage bereitgestellt werden.

An den Gliedern können einstückig angeformte Trennstege vorgesehen sein, die als Innenraumaufteilung für den zwischen benachbarten Seitenwänden des Gliedes ausgebildeten Kanal der Leitungsführungseinrichtung dienen. Diese Trennstege können insbesondere wie auch die Seitenwände im Wesentlichen starr und biegesteif mit dem Bodenteil des jeweiligen Gliedes einstückig angeformt sein. Es können selbstverständlich auch mehrere lateral beabstandete Trennwände zur Innenraumaufteilung der Leitungsführungseinrichtung angeordnet sein. Gegebenenfalls können die Trennwände an die Deckelelemente anstoßen oder es können Verbindungsmittel zur lösbaren Verbindung der Trennstege mit den Deckelelementen vorgesehen sein.

Vorzugsweise sind die Deckelelemente derart ausgeführt, dass diese eine oberseitig im Wesentlichen geschlossene Leitungsführungseinrichtung bereitstellen. Insbesondere kann in Strecklage die Leitungsführungseinrichtung oberseitig vollständig geschlossen ausgeführt sein.

Zur Befestigung mehrerer einstückig hergestellter Leitungsführungseinrichtungen aneinander oder an einer anderen Einrichtung können an den Enden der Leitungsführungseinrichtung miteinander korrespondierende Befestigungselemente einstückig angeformt sein, so dass zwei baugleiche Leitungsführungseinrichtungen stirnseitig, d. h. unter Verlängerung derselben, zusammensetzbar sind.

Vorzugsweise ist an einem Ende derselben zumindest ein weibliches, vorzugsweise männliches Befestigungselement vorgesehen und an mehreren, d. h. zumindest zwei, oder sämtlichen Gliedern der Leitungsführungseinrichtung ein korrespondierendes männliches oder weibliches Befestigungselement vorgesehen. Die Befestigungselemente können hierbei insbesondere in einer konstanten Abfolge an der Leitungsführungseinrichtung vorgesehen sein, d. h. beispielsweise an jedem zweiten, jedem dritten oder jedem vierten Befestigungselement. Hierdurch ist die Leitungsführungseinrichtung unter Trennung benachbarter Glieder ablängbar, wobei stets ein endständiges Befestigungselement zur Verbindung mit einer baugleichen Leitungsführungseinrichtung bereitgestellt wird. Vorzugsweise ist an einem Ende der Leitungsführungseinrichtung ein männliches Befestigungselement und an mehreren oder sämtlichen anderen Gliedern korrespondierende weibliche Aufnahmen vorgesehen. Als männliches Befestigungselement kann an dem Bodenteil eines endständigen Gliedes ein in Leitungsführungseinrichtung vorstehender Steg bzw. eine Verlängerung des Bodenteils vorgesehen sein, an welcher ein oder mehrere Befestigungszapfen vorstehen, welche in korrespondierende Aufnahmen, die an den Unterseiten der Bodenteile der Glieder vorgesehen sind, festlegbar sind.
Vorzugsweise weist die erfindungsgemäße Leitungsführungseinrichtung über zumindest im wesentlichen die Länge eines mehrere Glieder miteinander verbindenden, durchgehenden Bodenteils oder über die gesamte Länge der Leitungsführungseinrichtung einen elektrischen Widerstand in dem Bereich von 6.000 bis 20.000 Ohm, vorzugsweise ≤ 10.000 Ohm oder ≤ 6.000, besonders bevorzugt ≤ 4.000 Ohm auf. Der genannte elektrische Widerstand kann über die Gesamtlänge der Leitungsführungseinrichtung, d.h. zwischen dem ersten und dem letzten Glied der Leitungsführungseinrichtung oder zwischen den Endbefestigungsteilen bzw. elektrischen Anschlusselementen an den beiden Enden der Leitungsführungseinrichtung mit dem stationären und dem beweglichen Verbraucher bestehen.

Der elektrische Widerstand in dem Bereich von 6.000 bis 20.000 Ohm, oder wie oben näher spezifiert von vorzugsweise ≤ 10.000 Ohm zwischen mehreren in Leitungsführungslängsrichtung beabstandeten Gliedern kann alternativ auch zwischen zwei Gliedern bestehen, die jeweils durch eine geeignete elektrische, vorzugsweise metallische, Ableitung geerdet sind oder mit einem geeigneten Erdungspunkt oder einer Erdungseinrichtung versehen sind. Die Erdungseinrichtung kann im einfachsten Fall ein Anschlusspunkt sein, der zum elektrischen Anschluss einer elektrischen Ableitung ausgebildet ist.

Vorzugsweise werden die geerdeten oder mit einem Erdungspunkt oder einer Erdungseinrichtung versehenen Gliedern, die jeweils die in Führungslängsrichtung nächstbenachbarten, entsprechend ausgebildeten Glieder sein können, durch ein durchgehendes Bodenteil miteinander verbunden, ohne dass dies immer zwingend notwendig ist.

Das durchgehende Bodenteil kann jeweils eine Vielzahl von Gliedern miteinander verbinden, oder zwischen den, jeweils vorzugsweise durch ein durchgehendes Bodenteil miteinander verbunden Gliedern, geerdeten oder mit einer Erdungseinrichtung versehenen Gliedern ist jeweils eine Vielzahl von Gliedern angeordnet, beispielsweise 4, 10, 25 oder 100 oder jeweils mehr Glieder. Gegebenfalls können auch mehrere Leitungsführungseinrichtungen mit jeweils durchgehendem Bodenteil zur Verlängerung der Einrichtung hintereinander angeordnet und miteinander verbunden sein, wobei das durchgehende Bodenteil sich jeweils vorzugsweise über mehr als ein Viertel oder mehr als die halbe Länge der Leitungsführungseinrichtung erstreckt. Jedes der Bodenteile ist hierbei vorzugsweise mit jeweils mindestens einem oder mehreren geerdeten oder mit einer Erdungseinrichtung versehenen Gliedern ausgestattet, um so für den jeweiligen Anwendungsfall sicher elektrostatische Aufladungen der Leitungsführungseinrichtungen vermeiden und Ladungsträger abführen zu können. In der Leitungsführungseinrichtung in Längsrichtung hintereinander jeweils eine Vielzahl von Gliedern verbindende Boden teile können untereinander durch einen Überbrückungskontakt elektrisch leitend verbunden sein, um die genannten Widerstandswerte von vorzugsweise ≤ 20.000 Ohm oder ≤ 10.000 Ohm oder andere gewünschte Widerstandswerte wie Oberflächenwiderstände zu erzielen. Das Überbrückungselement kann hierbei ein separates Bauteil darstellen, welches starr sein kann, um die benachbarten Glieder unverschenkbar miteinander zu verbinden, oder flexibel ausgeführt sein, beispielsweise als flexibler Ableitdraht oder dergleichen. Die benachbarten Bodenteile können hierbei auch miteinander überlappen.

Die geerdeten oder mit Erdungspunkten oder -einrichtungen versehen Glieder sind vorzugsweise gleichmäßig über die Länge der Leitungsführungseinrichtung verteilt.

Durch das durchgehende Bodenteil wird somit jeweils bei den oben genannten Ausführungen ein durchgehender elektrischer Leitungspfad bereitgestellt, der nicht durch irgendwelche Verbindungsbereiche von Bauteilen getrennt ist.

Ferner kann die erfindungsgemäße Leitungsführungseinrichtung über im wesentlichen die Länge eines mehrere Glieder miteinander verbindenen durchgehenden Bodenteils einen elektrischen Oberflächenwiderstand Rₛ und/oder einen End-zu-End-Widerstand Rₑ und/oder einen Punkt-zu-Punkt-Widerstand Rₚ von ≤ 1 x 10¹⁰ Ohm aufweisen, wobei der Widerstand vorzugsweise ≤ 1 x 10⁶ Ohm oder ≤ 1 x 10⁴ Ohm beträgt, beispielsweise in dem Bereich von 1 x 10⁴ ≤ Rₚ ≤ 1 x 10¹⁰ Ohm liegt. Der genannte Widerstand kann auch über einen Abstand in Leitungsführungslängsrichtung zwischen zwei benachbarten geerdeten oder mit einer Erdungseinrichtung versehenen Gliedern oder auch über die gesamte Länge der Leitungsführungseinrichtung, insbesondere von Endbefestigungselement zu Endbefestigungselement, vorliegen.

Zusätzlich oder alternativ ist die erfindungsgemäße Leitungsführungseinrichtung derart ausgeführt, dass diese über im wesentlichen die Länge eines mehrere Glieder miteinander verbindenen durchgehenden Bodenteils einen elektrischen einen Widerstand zu EPA-Erde und/oder zu einem Erdungspunkt R_{g} von ≤ 1 x 10¹² Ohm, vorzugsweise ≤ 1 x 10⁹ Ohm aufweist. Vorzugsweise liegt der genannte Widerstand in dem Bereich von 7,5 x 10⁵ ≤ R_{g} ≤ 1 x 10⁹ Ohm. Der genannte Widerstand kann auch über einen Abstand in Leitungsführungslängsrichtung zwischen zwei benachbarten geerdeten bzw. mit einer Erdungseinrichtung versehenen Gliedern und/oder über die gesamte Länge der Leitungsführungseinrichtung vorliegen.

Die Anzahl von Glieder, zwischen denen die genannten Maximalwiderstände Rₛ, Rₚ oder R_{g} vorliegen, können jeweils 4, 19, 25 oder 100 oder jeweils mehr Glieder sein, oder im Falle mehrer hintereinander angeordneter Bodenelemente mehr als ein Viertel oder mehr als die halbe Länge der Leitungsführungseinrichtung sein.

Vorzugsweise ist die Leitungsführungseinrichtung hierbei als Kunststoffteil, insbesondere als Spritzgussteil, ausgebildet. Durch eine derartige Ausgestaltung der Leitungsführungseinrichtung kann diese die Erfordernisse eines ESD-Schutzelementes gemäß EN 61340-5-1 oder einer entsprechenden nationalen oder internationalen Norm aufweisen. Die Leitungsführungseinrichtung kann hierbei in Bereichen eingesetzt werden, in welchen elektrostatische Aufladungen von Einrichtungen zu vermeiden sind, beispielsweise bei der Herstellung von elektrischen oder elektronischen Bauteilen wie Halbleiterelementen, Leiterplatten oder dergleichen. Die Leitungsführungseinrichtungen können somit in Maschinen zur Herstellung derartiger Bauelemente oder in Maschinen zur Handhabung, beispielsweise zum Transport oder zur Verpackung derartiger Elemente vorteilhaft eingesetzt werden. Ferner können derartige Leitungsführungseinrichtungen in explosionsgeschützten Bereichen vorteilhaft eingesetzt werden.

Vorzugsweise besteht das durchgehende Bodenteil der Leitungsführungseinrichtung aus einem Kunststoffmaterial, insbesondere in Form eines Spritzgussteiles, wobei die Seitenteile einstückig angeformt sind. Gegebenenfalls können die geerdeten Glieder der Leitungsführungseinrichtung teilweise oder vollständig aus Metall bestehen, wobei zwischen Gliedern vorzugsweise ein durchgehendes Bodenteil oder eine geringe Anzahl von Abschnitten der Leitungsführungseinrichtung angeordnet sind, die durch Überbrückungselemente hoher elektrischer Leitfähigkeit verbunden sind. Vorzugsweise ist die Überbrückung derart ausgebildet, dass der elektrische Widerstand über den Überbrückungsbereich noch akzeptabel, geringfügig oder nicht höher ist als er im Falle eines durchgehenden Bodenteils wäre. Vorzugsweise ist der Widerstand im Überbrückungsbereich < 100%, < 50% oder < 20% oder nicht höher als bei durchgehendem Bodenteil. Im Überbrückungsbereich können die benachbarten Enden des Bodenelementes auch überlappen.

Die geerdeten Glieder können insbesondere die Endbefestigungsteile oder die diesen nächstbenachbarten Glieder darstellen, gegebenenfalls können diese Glieder auch durch eine Mehrzahl anderer Glieder von den Endbefestigungsteilen beabstandet sind. Ferner kann eine Erdung von Bereichen der Leitungsführungseinrichtung dadurch erfolgen, dass an verschiedenen Teilbereichen einer Führungsrinne für die Leitungsführungseinrichtung oder von Elementen derselben, beispielsweise von Gleitschienen, auf denen das Obertrum der Leitungsführungseinrichtung ablegbar ist, geerdet sind.

Es versteht sich, dass die Leitungsführungseinrichtung sämtliche sonstige Erfordernisse gemäß der DIN EN 61340-5-1 oder entsprechender nationaler oder internationaler Normen erfüllen kann. Die Leitungsführungseinrichtung kann hierbei gegebenenfalls im Sinne einer Arbeitsoberfläche gemäß Tabelle 1 dieser EN-Norm verstanden werden. Es versteht sich, dass die jeweilige Bestimmung der genannten Widerstände ebenfalls nach dieser Norm erfolgen kann. Bezüglich der Erfordernisse einer EPA-Erdungseinrichtung bzw. eines EPA-Erdungsanschlusspunktes sei auf Abschnitt 5.3 der EN 61340-5-1: 2001 verwiesen, bezüglich des Widerstandsmessverfahrens zum Prüfen von Arbeitsoberflächen auf Abschnitt A.1 der EN 61340-5-1:2001 verwiesen, bezüglich des Gerätes für Widerstandsmessungen auf Anhang A.1 der DIN-Norm IEC 1340-4-1, bezüglich der Ausbildung von Elektroden zur Messung der jeweiligen Widerstände sei auf die DIN 53482 bzw. die DIN IEC 60093 verwiesen. Sämtliche oben genannten Normen seien hiermit als Referenz mit eingeschlossen.

Die erfindungsgemäße Leitungsführungseinrichtung kann insgesamt aus einem einheitlichen Material hergestellt sein, gegebenenfalls können auch zur Herstellung des mehrere Glieder miteinander verbindenden Bodenteils einerseits und der gegenüberliegenden Seitenwände und/oder eines Deckelelementes andererseits Materialien mit unterschiedlicher elektrischer Leitfähigkeit verwendet werden. Insbesondere kann das Bodenteil hierbei eine höhere elektrische Leitfähigkeit aufweisen als die genannten anderen Bereiche.

Um ein Material mit einer ausreichend hohen elektrischen Leitfähigkeit bereitzustellen kann die Oberfläche der jeweiligen Glieder, einschließlich der Oberfläche des mehrere Glieder miteinander verbindenden Bodenelementes, die jeweils insbesondere als Kunststoffteile gefertigt sein können, mit einer leitfähigen Beschichtung versehen sein. Als derartige Beschichtung kann beispielsweise eine Graphitierung oder eine Beschichtung mit einem metallischen oder halbleitenden Werkstoff vorgesehen sein. Ferner können alternativ oder zusätzlich flüchtige Antistatika in das Material der Leitungsführungseinrichtung, insbesondere im Bereich der Seitenwände und/oder des Bodenelementes inkorporiert sein. Besonders bevorzugt weist das Material zur Herstellung der Leitungsführungseinrichtung intrinsisch eine entsprechende Volumenleitfähigkeit oder Oberflächenleitfähigkeit auf, um die genannten Bedingungen zu erfüllen. Hierzu kann das Kunststoffmaterial beispielsweise mit entsprechenden Füllstoffen versehen sein, die die Leitfähigkeit des Kunststoffmaterials erhöhen, beispielsweise Kohlenstofffasern, Fasern metallischer oder halbleitender Materialien wie Silicium, metallische oder halbleitende Pulver wie Aluminium- oder Siliciumpulver, oder dergleichen. Schließlich können in das Bodenteil sich auch über mehrere Glieder oder die gesamte Führungseinrichtung erstreckende Ableitdrähte eingearbeitet sein. Es versteht sich, dass die entsprechende Leitfähigkeit auch auf eine andere geeignete Weise erzeugt werden kann.

Insgesamt gesehen ist es hierdurch möglich, eine Leitungsführungseinrichtung für ESD-Schutzzonen (ESD: "electrostatic sensitive device", teilweise auch in der Bedeutung von "electrostatic sensitive device") und/oder für explosionsgefährdete Bereiche bereitzustellen.

Die Erfindung wird nachfolgend beispielhaft beschrieben und anhand der Figuren beispielhaft erläutert. Es zeigen:
- Figuren 1 bis 3: verschiedene Ansichten einer ersten erfindungsgemäßen Leitungsführungseinrichtung mit vollständig aufgeklappten Deckelelementen (Fig. 1, 2) und vollständig zugeklappten Deckelelementen (Figur 3)
- Figuren 4 bis 6: eine weitere Ausführungsform einer erfindungsgemäßen Leitungsführungseinrichtung mit vollständig aufgeklappten Deckelelementen (Fig. 4,5) und vollständig zugeklappten Deckelelementen (Figur 6),
- Figur 7: eine schematische Detailansicht des Übergangsbereichs benachbarter Glieder,
- Figur 8: eine schematische Anordnung einer weiteren erfindungsgemäßen Leitungsführungseinrichtung in Krümmungslage (Fig. 8a), im Querschnitt (Fig. 8b) und in perspektivischer Ansicht (Fig. 8c),
- Figuren 9 und 10: eine weitere Ausführungsform einer erfindungsgemäßen Leitungsführungseinrichtung mit vollständig aufgeklappten Deckelelementen (Fig. 9) und vollständig zugeklappten Deckelelementen (Figur 10).

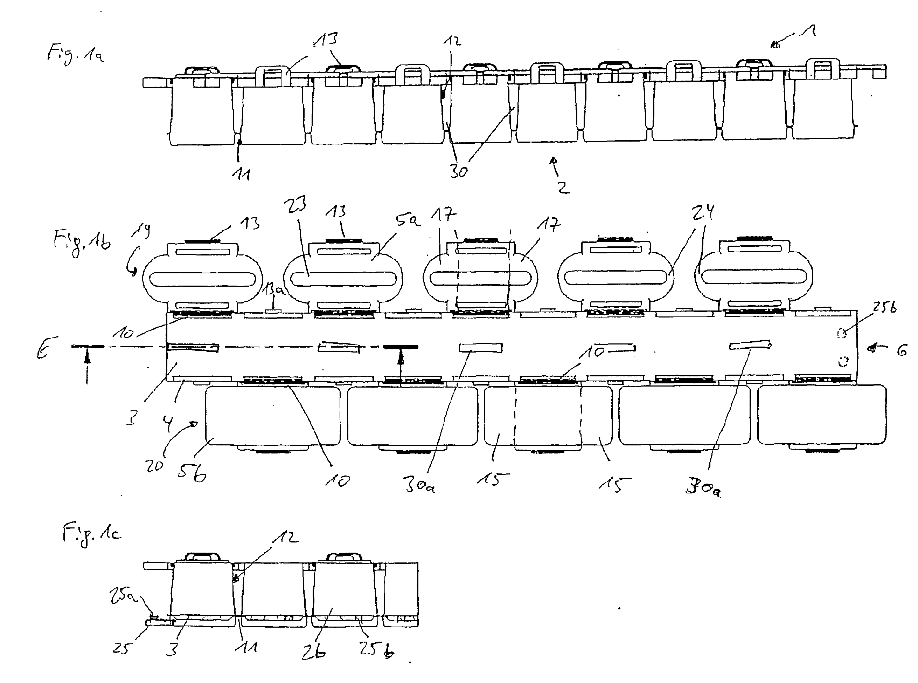

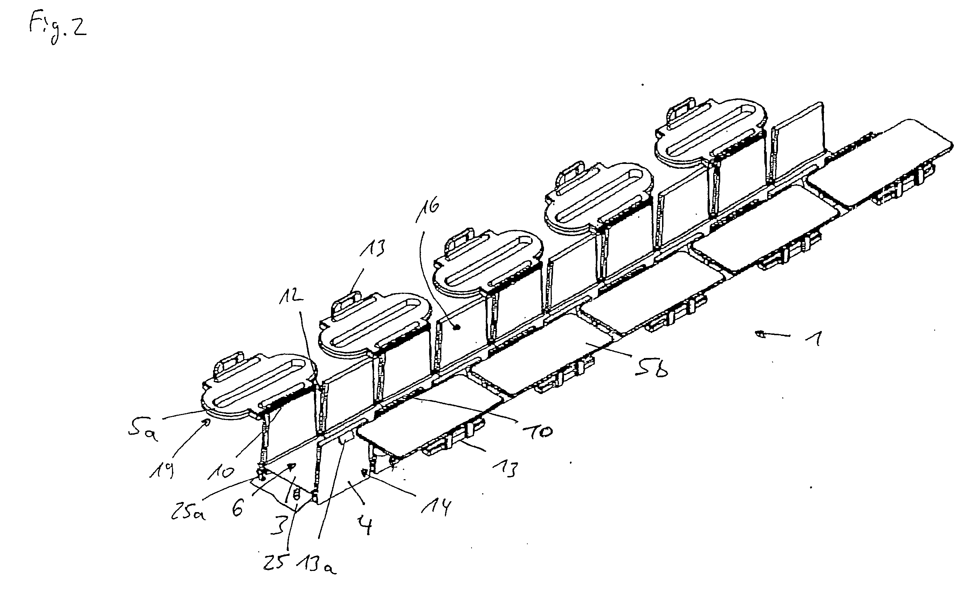

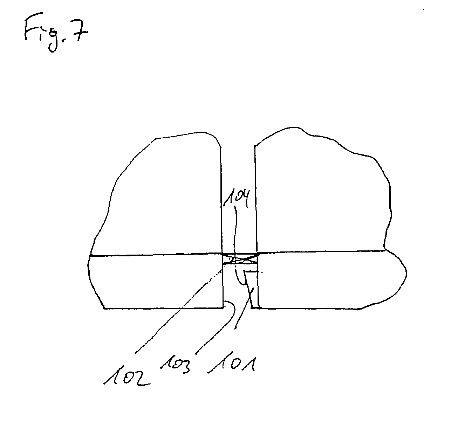

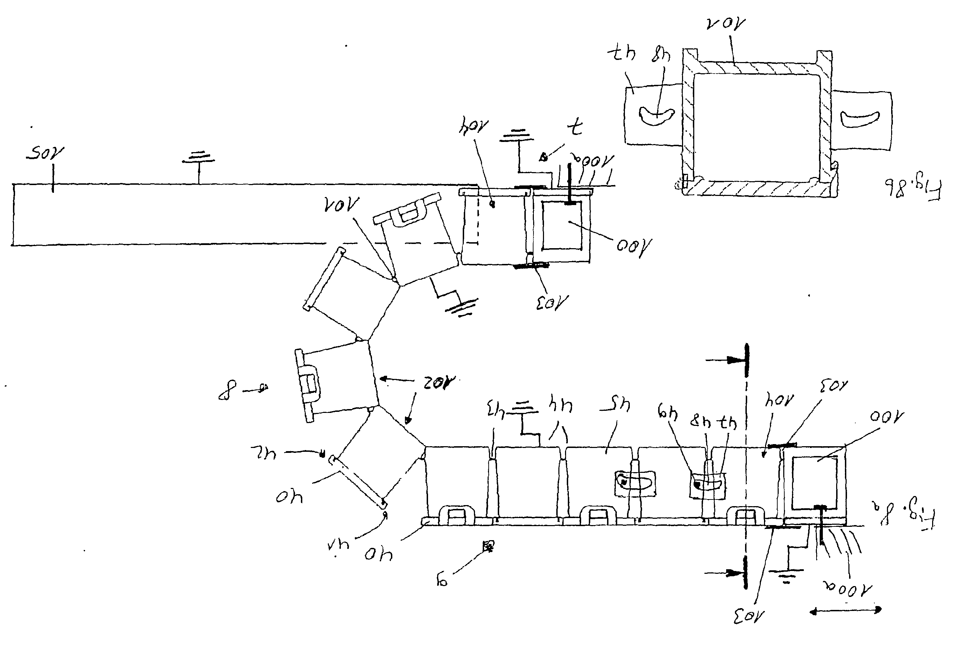

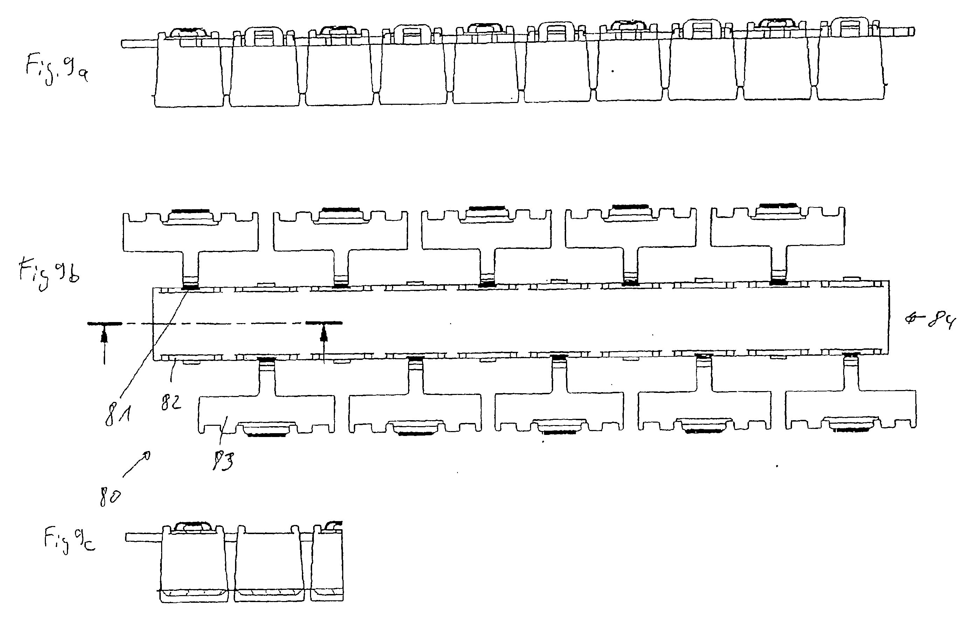

Die Leitungsführungseinrichtung 1 nach den Figuren 1 bis 3 stellt ein in einem Spritzgussverfahren einstückig hergestelltes Bauteil dar, welches aus einer Vielzahl von gelenkig miteinander verbundenen Gliedern 2 besteht, die jeweils ein Bodenelement 3, jeweils zwei an dem Bodenelement 3 angeformte, in Leitungsführungslängsrichtung lateral beabstandete Seitenwände 4 und jeweils ein Deckelelement 5 aufweisen. Durch das Bodenelement, Deckelelement und die benachbarten Seitenwände wird jeweils ein Kanal 6 zur Aufnahme von Leitungen ausgebildet, die in Leitungsführungslängsrichtung verlaufen können. Wie in Figur 8 gezeigt ist, kann die Leitungsführungseinrichtung unter Ausbildung eines Untertrums 7, eines Obertrums 9 und eines diese verbindenden Umlenkbereichs 8 angeordnet werden. Zumindest eines der Enden der Leitungsführungseinrichtung ist an einem stationären Verbraucher und das gegenüberliegende Ende an einem beweglichen Verbraucher befestigbar, so dass die Leitungsführungseinrichtung gegenüber dem stationären Ende in Längsrichtung verfahrbar ist.

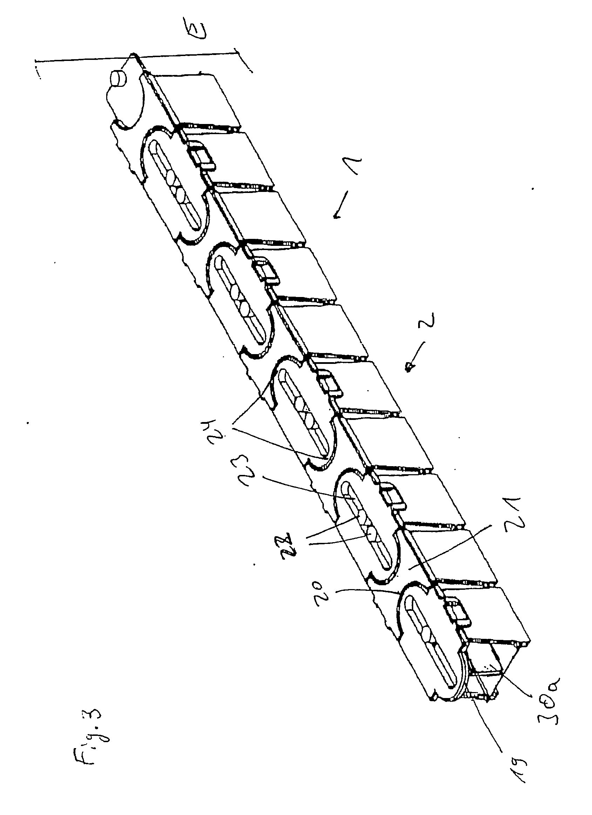

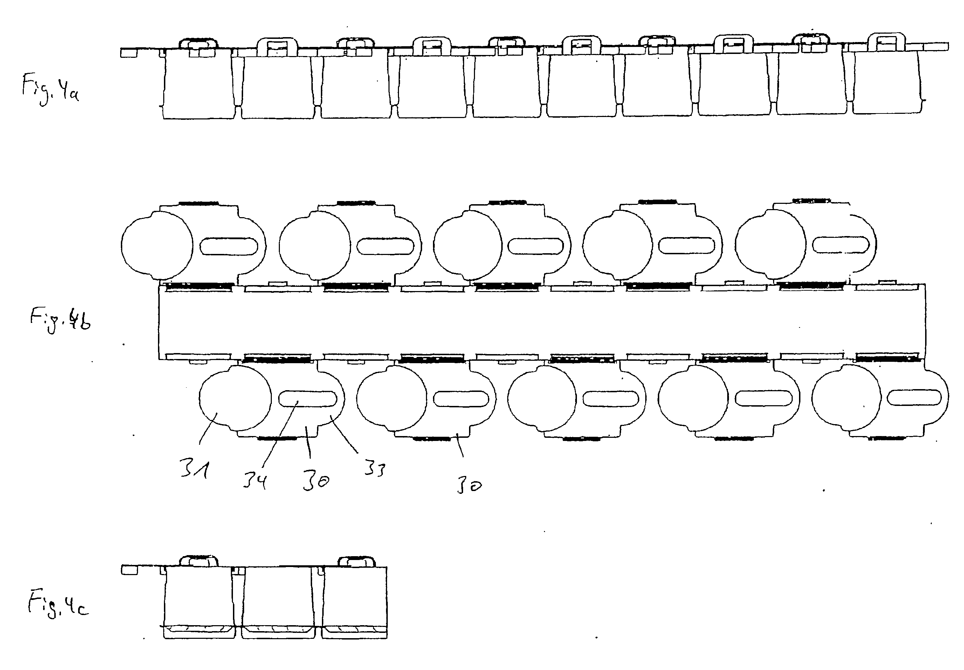

Um bei kleindimensionierten Gliedern, die beispielsweise eine Breite und/oder Höhe von 0,5 bis 1 cm aufweisen können, die eine exakte Führung der Leitungen ermöglicht, sind Bodenteil 3 und die beiden Seitenwände 4 der jeweiligen Glieder in Form von U-Profilen einstückig ausgebildet, die zumindest unter durchschnittlicher bestimmungsgemäßer Belastung im Wesentlichen starr ausgeformt sind. Bei einer derartigen, im Wesentlichen starren Ausbildung der U-Profile wird auf gelenkartige Materialschwächungen im Bereich der U-Profile, beispielsweise in dem Übergangsbereich des Bodenteils zu einer oder beiden Seitenwänden auf signifikante Materialschwächungen oder Gelenkverbindungen verzichtet. Die Deckelelemente 5a, 5b sind an den jeweiligen Seitenenden mit Gelenkverbindungen 10, die insbesondere als Filmscharnier ausgebildet sein können, einstückig angeformt. Im Herstellungszustand in dem jeweiligen Formwerkzeug kann die Leitungsführungseinrichtung die in Figur 1,2 gezeigte Anordnung der Deckelelemente aufweisen, ohne hierauf beschränkt zu sein. Die Deckelelemente 5a, 5b sind ausgehend von der in Figur 1 dargestellten Offenstellung, in welcher der Querschnitt der Leitungsführungseinrichtung zumindest teilweise oder vollständig freigegeben wird, in die in Figur 3 gezeigte Schließstellung überführbar, in welche die Deckelelemente an den den jeweiligen Gelenkverbindungen 10 gegenüberliegenden Seitenwänden lösbar befestigt sind.

Die Bodenteile 3 der Glieder sind jeweils unter Ausbildung eines durchgehenden einstückigen Bandes durch Gelenkverbindungen 11 miteinander verbunden, welche als Filmscharniere ausgeführt sein können. Gegebenenfalls können zusätzlich oder alternativ unter Ausbildung einer einstückig geformten Leitungsführungseinrichtung mit einer Vielzahl von Gliedern einstückig angeformte Gelenkelemente zwischen den aufeinander zuweisenden Stirnseiten 12 benachbarter Glieder angeordnet sein.

Wie aus den Figuren 1 und 2 hervorgeht, sind zwei unterschiedlich ausgebildete Deckelelemente 5a, 5b ausgebildet, die jeweils alternierend und auf gegenüberliegenden Seiten der Leitungsführungseinrichtung an den Seitenwänden einstückig angeformt sind. Nach dem Ausführungsbeispiel sind beide Deckelelemente 5a, 5b mit einstückig angeformten Verschlussmitteln 13 in Form von Laschen versehen, welche an den den Gelenkverbindungen 10 gegenüberliegenden Seitenwänden des jeweiligen Gliedes lösbar festlegbar sind, insbesondere mittels Formschlussverbindungen, insbesondere Rastverbindungen. Die Verschlusselemente 13 sind hierbei gegenüber den Deckelelementen im Wesentlichen lageunveränderlich, sie können jedoch bei Bedarf ebenfalls mittels Gelenkverbindungen, beispielsweise in Form von Filmscharnieren, mit den zugehörigen Deckelelementen verbunden sein. An den Außenwänden 14 der Seitenwände 4 sind Verschlusselemente 13a in Form von Rastnasen vorgesehen, die mit den Verschlusselementen der Deckelelemente ankoppelbar sind. Die Verschlusselemente 13 sind quer zur Leitungsführungseinrichtung von den Außenwänden 14 zu beabstanden, um diese zu lösen, so dass innenseitig auf die Deckelelemente wirkende Kräfte der geführten Leitungen nicht in Öffnungsrichtung der Verschlusselemente auf die Deckelelemente wirken. Gegebenenfalls kann es ausreichend sein, nur die in Verschlussstellung oben liegenden Deckelelemente, gemäß den Figuren 1 bis 3 die Deckelelemente 5a, mit entsprechenden Verschlusselementen zu versehen. Die Verschlusselemente greifen somit vorzugsweise seitlich, d. h. innenseitig oder außenseitig, an den Seitenwänden des jeweiligen Gliedes an.

Die Deckelelemente 5b eines jeweiligen Gliedes weisen somit in Richtung auf zumindest eines oder beide der benachbarten Glieder vorstehende Bereiche 13 auf, die in Verschlussstellung zwischen den gegenüberliegenden Seitenwänden des jeweils benachbarten Gliedes angeordnet sind. Die vorstehenden Bereiche 15 sind hierbei mit geringem seitlichen Spiel von den Innenseiten 16 der Seitenwände beabstandet oder liegen an diesen an. Durch dieses Eingreifen der Deckelbereiche eines Gliedes in das jeweils benachbarte Glied wird die Leitungsführungseinrichtung gegen seitlich einwirkende Kräfte, die ein Ein- bzw. Ausbauchen der Leitungsführungseinrichtung gegenüber der Strecklage bedingen würden, stabilisiert.

Die Deckelelemente weisen jeweils sich in Längsrichtung der Leitungsführungseinrichtung erstreckende Gelenkverbindungen 10 auf. Nach dem Ausführungsbeispiel entspricht die Längserstreckung der Gelenkverbindung der Länge der Glieder in Leitungsführungslängsrichtung, sie können jedoch gegebenenfalls auch eine geringere Länge aufweisen. Es versteht sich, dass die Gelenkverbindung gegebenenfalls auch unterbrochen sein kann. An den Deckelelementen sind ferner in Richtung auf das jeweils benachbarte Glied vorstehende Bereiche 15 angeordnet, die mit dem Deckelelement 5a des benachbarten Gliedes überlappen können. Die Überlappung kann sich auf die von den Gelenkverbindungen in Leitungsführungslängsrichtung vorstehenden Bereichen erstrecken oder die vorstehenden Bereiche 15 eines Gliedes können auf Höhe des Gelenkbereiches eines benachbarten Gliedes mit diesem zur Überlappung kommen. Die vorstehenden Bereiche der jeweiligen Deckelelemente sind somit jeweils in Art von Laschen ausgebildet. Diese Laschen können, wie bei den Deckelelementen 5b gemäß Figur 2, eine geringere Materialstärke als die Deckelelementbereiche auf Höhe der Gelenkverbindungen aufweisen, so dass eine Überführung der Leitungsführungseinrichtung in eine Krümmungslage unter Biegebeanspruchung der Laschen erleichtert wird, die laschenartig vorstehenden Bereiche 17 der Deckelelemente können, wie nach dem Ausführungsbeispiel bei den Deckelelementen 5a (Fig. 1b), auch im Wesentlichen die gleiche Materialstärke wie die Deckelelemente aufweisen. Dies gilt nach dem Ausführungsbeispiel insbesondere für das Deckelelement, welches bei geschlossener Leitungsführungseinrichtung dem jeweiligen Bodenteil abgewandt ist, also die Oberseite der Leitungsführungseinrichtung bildet.

Die einander überlappenden vorstehenden Bereiche 15, 17 der Deckelelemente 5a, 5b weisen ferner miteinander korrespondierende Anschlagpaare auf, die in Strecklage oder in Krümmungslage der Leitungsführungseinrichtung wirken. Die Anschläge der korrespondierenden Anschlagpaare benachbarter Glieder sind hier sämtlich an den jeweiligen Deckelelementen angeordnet, gegebenenfalls können diese auch zumindest teilweise an den Seitenwänden vorgesehen sein.

Als Anschlag in Strecklage wirken die jeweils auf das benachbarte Glied zuweisenden Stirnseiten 19, 20 der Deckelelemente 5a, 5b. Die Stirnseite eines ersten Deckelelementes, hier des in Verschlussstellung oberen Deckelelementes 5a, welche als Anschlag wirkt, ist hierbei bogenförmig ausgebildet, die korrespondierende stirnseitige Anschlagfläche des Deckelelementes 5b, welches nach dem Ausführungsbeispiel zumindest mit dem Überlappungsbereich unterhalb des Deckelelementes 5a angeordnet ist, ist hierbei bogenförmig eingebaucht. Die bogenförmigen Krümmungen entsprechen jeweils vorzugsweise Kreisbögen. Die Stirnseiten der Deckelelemente 5a, 5b sind hierbei vorzugsweise vollflächig aneinander anlegbar. Durch die zu den Bodenteilen hin nach unten gekröpften Überlappungsbereiche 15 der Deckelelemente 5b wird ermöglicht, dass eine im Wesentlichen ebene Oberseite der Leitungsführungseinrichtung bereitgestellt wird, wozu die Oberseiten der Deckelelemente 5a und die mittleren Verdickungsbereiche 21 der Deckelelemente 5b fungieren.

Zur Bereitstellung eines in Krümmungslage der Leitungsführungseinrichtung wirkenden Anschlagsystems sind Deckelelemente 5b mit vorstehenden Bereichen 15 ausgebildet, die mit Zapfen 22 versehen sind, die quer, genauer senkrecht, zur Leitungsführungseinrichtung vorstehen und hier im Wesentlichen senkrecht zu den Bodenelementen angeordnet sind. Die Zapfen 22, die als Druckknöpfe ausgebildet sind, greifen in ein Langloch 23 des Deckelelementes 5a des benachbarten Gliedes ein. Das Langloch 23 der Deckelelemente 5a weist nach dem Ausführungsbeispiel eine derartige Ausdehnung in Leitungsführungslängsrichtung auf, dass Anschlagzapfen beider benachbarter Glieder in dem Langloch geführt werden können, bis die Zapfen jeweils an den das Langloch 23 in Leitungsführungslängsrichtung begrenzenden Anschlagbereichen 24 anschlagen. Zur Verhinderung eines Herausspringens der als Druckknöpfe ausgebildeten Zapfen 22 aus den Langlöchern 23 in Krümmungslage der Leitungsführungseinrichtung sind die Langlöcher 23 mit zur Längshauptebene der Leitungsführungseinrichtung hin vorstehenden Stegen (nicht dargestellt) versehen.

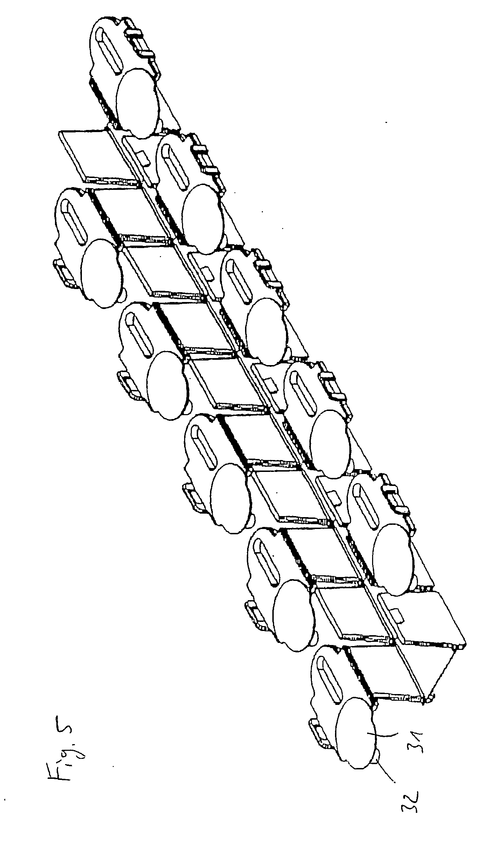

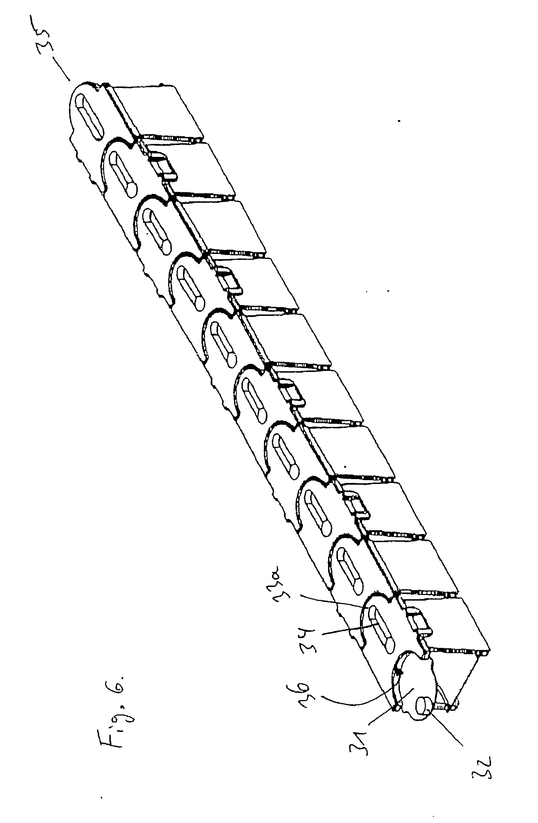

Dadurch, dass die in Richtung auf das benachbarte Glied vorstehenden Bereiche 17 der Deckelelemente (entsprechend auch die Bereiche 31, 33a der Ausführungsform nach Fig. 4-6) in Deckelelementausnehmungen der benachbarten Glieder eingreifen und in diesen seitlich eng, d.h. mit nur geringem oder praktisch ohne Spiel, geführt sind oder dass die Deckelelementbereiche 15 zwischen Seitenwänden des benachbarten Gliedes angeordnet und mit geringem oder praktisch ohne Spiel zwischen diesen geführt sind, wird die Seitenstabilität der Leitungsführungseinrichtung wesentlich erhöht. Deckelelementbereiche eines ersten Gliedes liegen somit seitlich, vorzugsweise beidseitig, mit Bereichen des benachbarten Gliedes an oder kommen bei geringen seitlichen Kräften mit diesen zur Anlage. Die seitliche Anlage ist zumindest in einem Teilbereich zumindest in Strecklage der Einrichtung gegeben, vorzugsweise über den gesamten Verschwenkwinkel der Glieder zueinander.

Die in Strecklage und/oder in Krümmungslage der Leitungsführungseinrichtung wirkenden jeweils korrespondierenden Anschlagpaare 19, 20; 22, 24 sind auf Höhe der Mittellängshauptebene E der Leitungsführungseinrichtung angeordnet.

Zur Verlängerung der Leitungsführungseinrichtung durch Anfügen einer weiteren beispielsweise baugleichen Leitungsführungseinrichtung sind an dem Endglied in Verlängerung des Bodenelementes 3 Befestigungselemente 25 vorgesehen, die nach dem Ausführungsbeispiel als männliche Befestigungselemente 25a aufweisen. Das gegenüberliegende Endglied der Leitungsführungseinrichtung weist an der Unterseite des Bodenelementes hierzu korrespondierende Aufnahmen 25b auf, um eine formschlüssige oder kraftschlüssige Verbindung, insbesondere eine Rastverbindung, ausbilden zu können. Auch von dem Endglied beabstandete Glieder 2b, beispielsweise sämtliche Glieder der Leitungsführungseinrichtung sind bodenseitig mit entsprechenden Aufnahmen für die männlichen Befestigungselemente ausgebildet, so dass die Leitungsführungseinrichtung beliebig unter Trennung benachbarter Glieder ablängbar ist und mit einer weiteren baugleichen Leitungsführungseinrichtung verbindbar ist.

Die zwischen den gegeneinander abwinkelbaren Gliedern einstückig ausgebildeten Gelenkelemente 11 sind auf Höhe der jeweiligen Bodenelemente angeordnet (Fig. 1c). Zwischen den aufeinander zuweisenden Stirnseiten 12 der Glieder sind Spalte 30 vorgesehen, die in etwa die Seitenwandstärke haben. Die stirnseitige Beabstandung der Glieder bietet insbesondere Vorteile bei der einstückigen Ausbildung der sich über mehr als zwei, vorzugsweise eine Vielzahl erstreckenden Leitungsführungseinrichtungen in einem Spritzgussverfahren unter Bereitstellung von im Wesentlichen starren Gliedern.

An den Bodenelementen einstückig angeformte Trennstege 30a als Innenraufteilungen sind in Fig. 1b, 3 schematisch dargestellt. Die Trennstege können im wesentlichen starr ausgeführt sein..

In den Figuren 4 - 6 ist eine weitere Ausführungsform der erfindungsgemäßen Leitungsführungseinrichtung dargestellt, die sich im Wesentlichen lediglich in der Ausbildung der Deckelelemente von dem ersten Ausführungsbeispiel unterscheidet. Nach diesem Ausführungsbeispiel ist nur eine Art von Deckelelementen 30 vorgesehen, die jeweils an einem Ende einen in Richtung auf das benachbarte Glied vorstehenden laschenartigen Bereich 31 aufweisen, der mit einem als Anschlag dienenden Zapfen 32 versehen ist. Das gegenüberliegende Ende des Deckelelementes 30 weist einen von der Höhe der Gelenkverbindung aus in Richtung auf das benachbarte Glied vorspringenden Bereich 33 auf, welcher mit einem Langloch 34 versehen ist, in welchem der Zapfen 32 bei einer Abwinkelungsbewegung der Leitungsführungseinrichtung verschieblich geführt wird. Der den Zapfen haltende vorstehende Bereich 31 weist eine vergleichsweise geringe Materialstärke auf und ist bei Überführung der Leitungsführungseinrichtung in eine Krümmungsanordnung elastisch verbiegbar und abwinkelbar. Der vorstehende Bereich 33 kann demgegenüber vergleichsweise starr ausgebildet sein. Ferner greift das stirnseitige Ende 33a eines der vorstehenden Bereiche des Deckelelementes in eine korrespondierende Ausnehmung des benachbarten Deckelelementes ein, so dass unter Anlage der Stirnseiten 35, 36 der benachbarten Deckelelemente ein in Strecklage der Leitungsführungseinrichtung wirkendes Anschlagpaar bereitgestellt wird. Gleichzeitig kann in Strecklage der Zapfen 32 an dem das Langloch 34 begrenzenden Bereich des Deckelelementes unter Ausbildung eines weiteren in Strecklage wirkenden Anschlagpaares anliegen. In Krümmungsanordnung schlägt der Zapfen 32 an dem gegenüberliegenden Endbereich des Langloches 34 an dem Deckelbereich 38 an, welcher das Langloch 34 begrenzt. Es versteht sich, dass gegebenenfalls, wie auch in dem Ausführungsbeispiel gemäß Figuren 1 bis 3, der mit dem Langloch versehene Deckelbereich in Art einer bei Abwinkelung der Leitungsführungseinrichtung elastisch deformierbaren Lasche ausgeführt sein kann und dass der den Anschlagzapfen 32 haltende vorstehende Bereich 31 mit seiner Stirnseite einen in Strecklage der Leitungsführungseinrichtung wirkenden Anschlag bereitstellen kann. Ferner können nach diesem Ausführungsbeispiel wie auch dem nach den Figuren 1 bis 3, beide in Richtung auf das benachbarte Glied vorstehenden Bereiche 31, 33 bei Abwinkelung der Leitungsführungseinrichtung verbiegbar, vorzugsweise elastisch verbiegbar, ausgeführt sein, oder beide Bereiche mit stirnseitigen Anschlagflächen ausgeführt sein.

Gemäß Figur 7 können an den Bodenplatten oder den den Bodenplatten zugewandten unteren Bereichen der Seitenwände in Richtung auf das benachbarte Glied hin vorstehende Vorsprünge 101 vorgesehen sein, welche vorzugsweise unterhalb der Gelenkverbindung 102 angeordnet sind. Die vorstehenden Bereiche stellen in Krümmungsanordnung der Leitungsführungseinrichtung wirkende Anschläge dar, die mit gegenüberliegenden Bereichen des benachbarten Gliedes zur Anlage bringbar sind. Zumindest eine oder beide der Anschläge 103, 104 können hierbei abgeschrägte Bereiche aufweisen, so dass in Krümmungsanordnung der Leitungsführungseinrichtung flächige Anschlagbereiche bereitgestellt werden.

Figur 8 zeigt ein Ausführungsbeispiel einer erfindungsgemäßen Leitungsführungseinrichtung, welches sich von dem Ausführungsbeispiel nach den Figuren 1 bis 3 im Wesentlichen dadurch unterscheidet, dass die Deckelelemente 40 keine miteinander überlappenden Bereiche aufweisen sondern im Wesentlichen die vorderen und hinteren Stirnseiten 41, 42 der Deckelelemente als Anschlagflächen dienen. Gegebenenfalls können die Stirnseiten Verbreiterungen aufweisen, um die Anschlagflächen zu vergrößern.

Gemäß Figur 8a können die dem einstückig angeformten Gelenkelement 43 zugewandten Endbereiche der aufeinander zuweisenden Stirnseiten 44 der Seitenwände 45 in Krümmungslage der Leitungsführungseinrichtung, d. h. im Umlenkbereich derselben als Anschläge dienen.

Die in Leitungsführungslängsrichtung aufeinanderfolgenden Seitenwände können auch unterschiedliche Höhen aufweisen. Die Seitenwände, welche jeweils eine geringere Höhe aufweisen, sind mit über Gelenkverbindungen, beispielsweise in Form von Filmscharnieren einstückig angeformten Deckelelementen versehen. Die Deckelelemente jeden zweiten Gliedes in Richtung auf beide benachbarten Glieder vorstehende Bereiche aufweisen, die als Anschlagflächen dienen können und mit Stirnseiten der benachbarten Glieder in Strecklage der Leitungsführungseinrichtung zur Anlage kommen können.

Ferner sind in Figur 8a,b an den Außenseiten der Seitenwände 45 angeformte Laschen 47 angedeutet, die bogenförmig gekrümmte Langlöcher 48 aufweisen, durch welche jeweils ein Zapfen 49 eines benachbarten Gliedes eingreift. Durch die Laschen kann die Seitenstabilität der Einrichtung erhöht und in Zusammenwirken mit den Zapfen ein Anschlagsystem bereitgestellt werden, welches in Strecklage und/oder in Krümmungslage der Leitungsführungseinrichtung den Verschwenkwinkel der Glieder begrenzt. Die Laschen können in der in Fig. 8b dargestellten Position an den Seitenwänden 45 einstückig angeformt sein, z.B. in einem Spritzgussverfahren, und danach in die in Fig. 8a gezeigte Sollposition überführt werden, wozu die Laschen über nicht dargestellt Gelenkverbindungen an den Seitenwänden angelenkt sein können.

Beispielhaft für die erfindungsgemäßen Führungseinrichtangen sei deren Einsatz als ESD (electronic-static-discharge) Einrichtung anhand des Ausführungsbeispiels nach Figur 8 veranschaulicht, es versteht sich, dass entsprechendes auch für die anderen Ausführungsbeispiele gilt. Die schematisch wiedergegebenen Endbefestigungsteile 100, die auch die Funktion elektrischer Anschlusselemente haben können, die die Leitungsführungseinrichtung mit den jeweiligen Verbrauchern 100a, von denen zumindest einer beweglich ist, verbinden, können aus Metall oder aus einem ESD-tauglichen Material mit entsprechender elektrischer Leitfähigkeit bestehen. Das Anschlussglied ist hierbei mittels eines Überbrückungselementes 103 mit dem letzten Glied 104 der an einem durchgehenden Bodenteil angeordneten Glied unter Gewährleistung einer elektrisch ausreichend leitenden Verbindung verbunden. Hierbei kann das Überbrückungselement an der dem Boedenelement zu- und/oder abgewandten Seite des Gliedes angeordnet sein. Die elektrische Verbindung ist hier derart ausgebildet, dass der elektrische Widerstand nicht höher ist, als wenn auch zwischen dem letzten Glied 104 und dem Endbefestigungsteil 100 ein durchgehendes Bodenteil 101 verwendet worden wäre. Es versteht sich, dass alternativ auch das letzte Glied 104 oder eines der letzten Glieder der Leitungsführungseinrichtung, das jeweils mit einem durchgehenden Bodenteil 101 mit einer Vielzahl weiterer Glieder in Längsrichtung der Führungseinrichtung verbunden ist, unmittelbar an dem jeweiligen Verbraucher befestigt sein kann. Hierzu kann das Endglied der Einrichtung mit entsprechenden Befestigungseinrichtungen, im einfachsten Fall Durchgangsöffnungen zur Aufnahme von Befestigungselementen wie Schrauben versehen sein, die z.B. im Bodenteil und/oder den Seitenwänden der Glieder angeordnet sein können. Eines oder beide der jeweils letzten Glieder 104 können auch mit einem Anschlusspunkt für eine elektrische Ableitung, z.B. eine Erdung versehen sein.

Die Leitungsführungseinrichtung selber weist hierbei ein einziges sich über deren gesamte Länge erstreckendes Bodenteil 101 auf, welches jeweils die benachbarten Glieder 102 miteinander verbindet und gleichzeitig zusammen mit den Seitenwänden 45 die jeweiligen Glieder ausbildet. Seitenwände 45 und Bodenteil 101 bestehen hierbei aus demselben Material. Die Endbefestigungsteile 101a als Anschlusselemente (Mitnehmer und Festpunkt) sind hierbei jeweils elektrisch gemäß den Anforderungen in der EN 61340-5-1 geerdet. Ferner kann die Führungsrinne 105, innerhalb derer die Leitungsführungseinrichtung verfahrbar ist, an einer oder verschiedenen Stellen elektrisch geerdet. Die Führungsrinne oder eine entsprechende andere Unterlage für die Leitungsführungseinrichtung kann aus einem elektrisch leitenden Material, beispielsweise einem Metall oder einem ausreichend elektrischen Kunststoffmaterial, gegebenenfalls mit einer integrierten elektrischen Ableitung, hergestellt sein.

Die Leitungsführungseinrichtung ist hierbei derart ausgeführt, dass der Gesamtwiderstand über die Länge derselben ca. 8.000 Ohm beträgt und dass der Punkt-zu-Punkt-Widerstand Rₚ der Leitungsführungseinrichtung, gemessen von einem Punkt des ersten Gliedes bis zu einem Punkt des letzten Gliedes der Leitungsführungseinrichtung, die jeweils benachbart den Endbefestigungsteilen 100 angeordnet sein, in dem Bereich von 1 x 10⁴ bis 1 x 10¹⁰ Ohm liegt. Der Kontaktierungspunkt kann hierbei jeweils in die Mitte des jeweiligen Bodenelementes, oberseitig oder unterseitig, des jeweiligen Gliedes angeordnet sein. Durch diese Ausgestaltung können elektrische Aufladungen der Leitungsführungseinrichtung sicher vermieden werden, wobei eine Ableitung der elektrischen Ladungen über das gesamte über die Leitungsführungseinrichtung durchgehende Bodenelement erfolgt, welches ohne Materialunterbrechung einen durchgehenden elektrischen Leitfähigkeitspfad bereitstellt. Ferner können einzelne Glieder der Leitungsführungseinrichtung separat geerdet sein, so dass sich das durchgehende Bodenteil nach Möglichkeit zumindest benachbarte, in Führungslängsrichtung beabstandete geerdete Glieder verbindet. Die Führungseinrichtung kann hierbei beispielsweise 50 - 100 oder mehr Glieder aufweisen.

Gegebenenfalls kann, hier wie auch allgemein, eine ausreichende elektrische Leitfähigkeit der Leitfähigkeitspfades auch durch eine metallische oder halbleitende Beschichtung der den Leitfähigkeitspfad bereitstellenden Bereiche der Führungseinrichtung oder der gesamten Leitungsführungseinrichtung, beispielsweise durch Galvanisierung oder Bedampfung, erzielt werden.

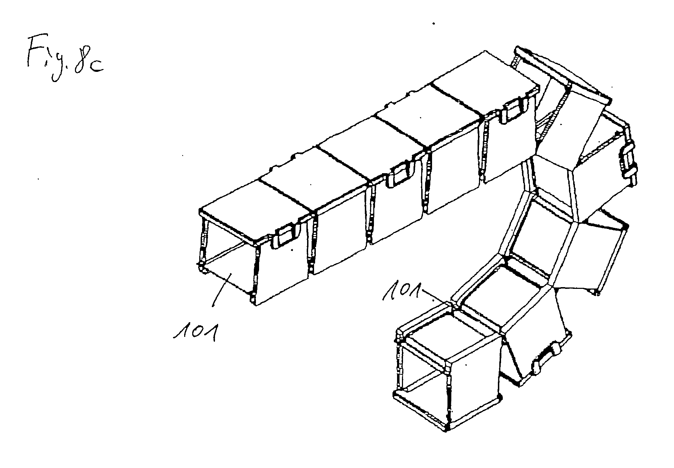

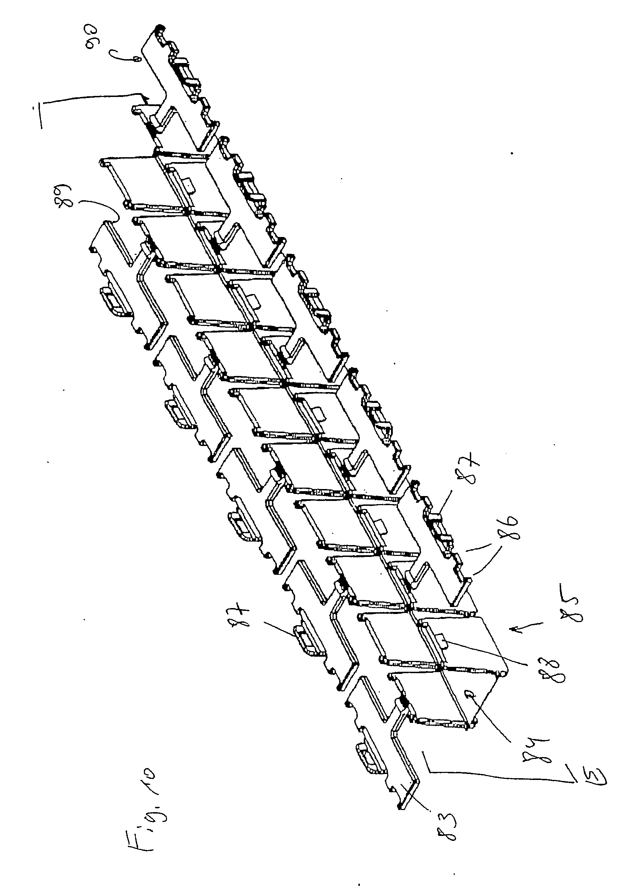

Figuren 9,10 zeigen eine weitere Ausführungsform der Leitungsführungseinrichtung 80, bei welcher die mittels der Gelenkverbindungen 81 einstückig an den Seitenwänden 82 angeformten Deckelelemente 83 mit einem wesentlichen Teil ihrer Längserstreckung den zwischen den gegenüberliegenden Seitenwänden begrenzten Kanal 84 nur teilweise überbrücken. Die Deckelelemente benachbarter Glieder 85 weisen somit eine auf Höhe des Kanals 84 angeordnete Trennlinie auf, die sich nach dem Ausführungsbeispiel in Leitungsführungslängsrichtung erstreckt und auf Höhe der Mittellängsebene E der Leitungsführungseinrichtung angeordnet ist. Die Deckelelemente 83 weisen ferner, gegebenenfalls unabhängig von der oben genannten Ausgestaltung, eine Verzahnung 86 auf, welche in eine korrespondierende Verzahnung an den Oberseiten der dem jeweiligen Anlenkbereich 81 gegenüberliegenden Seitenwände vorgesehen ist. Hierdurch werden die Deckelelemente zusätzlich zu den Verschlusselementen 87 an den Seitenwänden festgelegt, wobei durch die Verzahnungen zumindest in Strecklage und gegebenenfalls auch in Krümmungsanordnung der Leitungsführungseinrichtung in Längsrichtung wirkende Zugkräfte aufgenommen werden können. Gegebenenfalls können an den auf Höhe der Seitenwände angeordneten Bereichen der Deckelelemente auch an den Seitenwänden verschieblich angeordnete Befestigungsmittel vorgesehen sein, beispielsweise in Langlöchern der Seitenelemente angeordnete Führungszapfen, wobei sich die Langlöcher in Längsrichtung der Leitungsführungseinrichtung erstrecken können.

Unabhängig von den weiteren obigen Merkmalen sind die Deckelelemente somit bezogen auf den den Kanal abdeckenden Bereich zur Mittellängsebene der Leitungsführungseinrichtung asymmetrisch ausgebildet. Die Verschlusselemente 87 werden hierbei rastend an den außenseitig an den Seitenwänden angeordneten Rastvorsprüngen 88 festgelegt. In Krümmungsanordnung der Leitungsführungseinrichtung können sich somit gegebenenfalls die Deckelelemente schuppenartig voneinander abheben, gegebenenfalls können in den seitlichen Anlagebereichen 89 der Verbindungselemente aber auch nicht dargestellte Verbindungsmittel wie Raststege oder dergleichen angeordnet sein, die eine Verschiebung von Teilbereichen benachbarter Deckelelemente in Leitungsführungslängsrichtung ermöglichen, jedoch einer Beabstandung in einer Richtung senkrecht zu den Bodenelementen einen gewissen Widerstand entgegensetzen. An den zum Kanal hinweisenden Schmalseiten 90 der Deckelelemente können somit korrespondierende Aufnahmen, beispielsweise in Form von Aufnahmenuten, vorgesehen sein.

### Leitungsführungseinrichtung

### Bezugzeichenliste

- 1: Leitungsführungseinrichtung
- 2: Glied
- 3: Bodenelement
- 4: Seitenwand
- 5a, 5b: Deckelelement
- 6: Kanal
- 7: Untertrum
- 8: Umlenkbereich
- 9: Obertrum
- 10: Gelenkverbindung
- 12: Stirnseite
- 13: Verschlusselement
- 14: Außenseite
- 15: vorstehender Bereich
- 16: Innenseite
- 17: vorstehender Bereich
- 19: Stirnseite
- 20: Stirnseite
- 21: Verdickungsbereich
- 22: Zapfen
- 23: Langloch

## Patentansprüche

1. Leitungsführungseinrichtung zur Führung von Leitungen, bestehend aus einer Vielzahl gelenkig miteinander verbundener Glieder (2), wobei zumindest einige oder sämtliche der Glieder (2) jeweils ein Bodenteil (3), gegenüberliegende Seitenwände (4) und zumindest ein Deckelelement (5a, 5b) unter Ausbildung eines Kanals (6) zur Aufnahme von Leitungen aufweisen, wobei die Vielzahl der Glieder (2) unter Ausbildung eines durchgehenden Stranges einstückig aneinander angeformt sind, und wobei die Leitungsführungseinrichtung (1) unter Ausbildung eines Untertrums (7), eines Umlenkbereichs (8) und eines Obertrums (9) anordenbar ist, wobei das Bodenteil (3) und beide gegenüberliegenden Seitenwände (4) der Glieder als unter bestimmungsgemäßer Belastung im Wesentlichen starre U-Profile einstückig ausgeformt sind und wobei das Deckelelement (5a, 5b, 40, 83) des jeweiligen Gliedes an zumindest einer Seitenwand (4) desselben angeformt und gegenüber der Seitenwand lageveränderlich ausgebildet ist und in eine das Glied verschlie-ßende und eine den Bereich zwischen den gegenüberliegenden Seitenwänden zumindest im Wesentlichen freigebende Stellung überführbar ist, **dadurch gekennzeichnet, dass** miteinander korrespondierende Anschläge benachbarter Glieder, die in Strecklage und/oder Krümmungslage der Leitungsführungseinrichtung zusammenwirken, vorgesehen sind und die jeweils an den Deckelelementen (5a, 5b) der benachbarten Glieder angeordnet sind und/oder die durch überlappende Bereich benachbarter Glieder in Form von Laschen (47) bereitgestellt sind, die an den Seitenwänden (4) und/oder Deckelelemten (5) zumindest einiger Glieder einstückig angeformt sind und die ausgehend von einer ersten Position in eine zweite Position überführbar sind, in der sie mit einem Teilbereich eines benachbarten Gliedes überlappen.

2. Leitungsführungseinrichtung nach Anspruch 1, **dadurch gekennzeichnet dass** die Leitungsführungseinrichtung (1) als einstückiges Kunststoffteil hergestellt ist.

3. Leitungsführungseinrichtung nach Anspruch 1 oder 2, **dadurch gekennzeichnet, dass** an dem Deckelelement (5a,5b) ein einstückig angeformtes Verschlussmittel (13) vorgesehen ist, welches mit einem korrespondierenden Verschlussmittel (13a) unter Ausbildung einer deckelseitig geschlossenen Leitungsführungseinrichtung lösbar verbindbar ist, wobei das korrespondierende Verschlussmittel an der Seitenwand (4) des jeweiligen Gliedes angeordnet ist oder dass das Deckelelement zweiteilig ausgebildet ist und das Verschlusselement an dem dem ersten Deckelelementteil gegenüberliegenden Deckelelementteil des jeweiligen Gliedes einstückig angeformt ist.

4. Leitungsführungseinrichtung nach einem der Ansprüche 1 bis 3, **dadurch gekennzeichnet, dass** an benachbarten Gliedern (2) miteinander korrespondierende Anschläge (19, 20) vorgesehen sind, die in gestreckter Anordnung der Leitungsführungseinrichtung (1) miteinander zur Anlage kommen und dass zumindest einer der korrespondierenden Anschläge benachbarter Glieder an einem Deckelelement (5a, 5b) vorgesehen ist und/oder an den dem Kanal (6) zugewandten Innenseiten und/oder dem Kanal abgewandten Außenseiten der Seitenwände (4) und/oder der dem Bodenelement (3) des Gliedes abgewandten Oberseite der Seitenwand angeordnet sind.

5. Leitungsführungseinrichtung nach einem der Ansprüche 1 bis 4, **dadurch gekennzeichnet, dass** der Anschlag (19) als ein Bereich des Deckelelementes ausgebildet ist, der in gestreckter Anordnung der Leitungsführungseinrichtung auf das benachbarte Glied (2) vorsteht und in Anschlagstellung in eine mit einem Anschlag versehene Ausnehmung eines Deckelelementes und/oder einer Seitenwand des benachbarten Gliedes eingreift.

6. Leitungsführungseinrichtung nach einem der Ansprüche 1 bis 5, **dadurch gekennzeichnet, dass** die Deckelelemente (5) der Leitungsführungseinrichtung derart ausgebildet sind, dass diese in Strecklage der Leitungsführungseinrichtung eine geschlossene Oberseite der Leitungsführungseinrichtung bereitstellen.

7. Leitungsführungseinrichtung nach einem der Ansprüche 1 bis 6, **dadurch gekennzeichnet, dass** die Deckelelemente (5) der Leitungsführungseinrichtung derart ausgebildet sind, dass diese auch in Krümmungslage der Leitungsführungseinrichtung eine geschlossene Oberseite der Leitungsführungseinrichtung bereitstellen.

8. Leitungsführungseinrichtung nach einem der Ansprüche 1 bis 7, **dadurch gekennzeichnet, dass** zumindest an einigen Deckelelementen (5) der Glieder jeweils zumindest ein vorstehender Bereich (17) angeformt ist, der mit zumindest einem der jeweils benachbarten Glieder in gestreckter und/oder Krümmungslage der Leitungsführungseinrichtung überlappende Bereiche (15, 17) ausbildet und dass an den überlappenden Bereichen der jeweils benachbarten Glieder in Anschlagstellung wirkende Anschlagelemente (19, 22) angeordnet sind.

9. Leitungsführungseinrichtung nach einem der Ansprüche 1 bis 8, **dadurch gekennzeichnet, dass** zumindest an einigen Deckelelementen (5) beidseitig in Richtung auf beide benachbarten Glieder vorstehende Bereiche (15) angeformt sind, die jeweils mit dem Deckelelement der benachbarten Glieder oder mit von den benachbarten Deckelelementen in Richtung auf das jeweilige Glied vorstehenden Bereichen (17) überlappen.

10. Leitungsführungseinrichtung nach einem der Ansprüche 1 bis 9, **dadurch gekennzeichnet, dass** der Anschlag als ein von dem jeweils überlappenden Bereich quer zur Längsrichtung der Leitungsführungseinrichtung vorstehender Zapfen (22) ausgeführt ist, und dass der jeweils korrespondierende Anschlag eine den Zapfen aufnehmende Ausnehmung (23) aufweist, in welche der Zapfen (22) über zumindest einen Teil oder die vollständige Verschwenkbewegung benachbarter Glieder zueinander aufgenommen ist.

11. Leitungsführungseinrichtung nach einem der Ansprüche 1 bis 10, **dadurch gekennzeichnet, dass** in Strecklage der Leitungsführungseinrichtung (1) die Seitenwände (4) jeweils benachbarter Glieder mit ihren aufeinander zuweisenden Stirnseiten (12) zumindest über einen Teil der Höhe oder über die gesamte Höhe derselben voneinander beabstandet sind.

12. Leitungsführungseinrichtung nach einem der Ansprüche 1 bis 11, **dadurch gekennzeichnet, dass** an dem Bodenteil (3) und/oder der Seitenwand (4) zumindest eines oder beider der jeweils benachbarten Glieder ein auf das benachbarte Glied vorstehender Vorsprung (101) vorgesehen ist, der mit einem gegenüberliegenden Bereich (103) des benachbarten Gliedes in Krümmungslage der Leitungsführungseinrichtung anlegbar ist.

13. Leitungsführungseinrichtung nach einem der Ansprüche 1 bis 12, **dadurch gekennzeichnet, dass** an den Enden der Leitungsführungseinrichtung miteinander korrespondierende Befestigungselemente (25, 25a, 25b) einstückig angeformt sind, mittels derer die Leitungsführungseinrichtung mit einer baugleichen Leitungsführungseinrichtung unter Verlängerung derselben zusammensetzbar ist.

14. Leitungsführungseinrichtung nach Anspruch 13, **dadurch gekennzeichnet, dass** an einem Ende derselben zumindest ein Befestigungselement und an mehreren oder sämtlichen Gliedern (2) der Leitungsführungseinrichtung dazu korrespondierende Befestigungselemente vorgesehen sind, die zumindest nach Ablängung der Leitungsführungseinrichtung miteinander verbindbar sind.

15. Leitungsführungseinrichtung nach einem der Ansprüche 1 bis 14, **dadurch gekennzeichnet, dass** an zumindest einigen Gliedern zwischen gegenüberliegenden Seitenwänden des Gliedes zumindest ein Trennsteg (30a) als Innenraumaufteilung vorgesehen ist, der einstückig mit dem Bodenteil (3) verbunden ist.

16. Leitungsführungseinrichtung nach einem der Ansprüche 1 bis 15, **dadurch gekennzeichnet, dass** zumindest einige Deckelelemente (5) der Glieder in zumindest eines oder beide benachbarte Glieder eingreifen und mit einem Bereich (15) zwischen benachbarten Seitenwänden des jeweils benachbarten Gliedes angeordnet sind und dass der zwischen den Seitenwänden (4) angeordnete Bereich eine Breite aufweist, die im wesentlichen dem Abstand der Seitenwände (4) entspricht.

17. Leitungsführungseinrichtung nach einem der Ansprüche 1 bis 16, **dadurch gekennzeichnet, dass** die Leitungsführungseinrichtung über im wesentlichen die Länge des mehrere Glieder miteinander verbindenden Bodenteils oder über einen Abstand in Leitungsführungslängsrichtung zwischen zwei benachbarten geerdeten oder mit einer Erdungseinrichtung versehenen Gliedern, die vorzugsweise über ein durchgehendes Bodenteil miteinander verbunden sind, oder über die gesamte Länge der Leitungsführungseinrichtung einen elektrischen Widerstand R von ca. 20.000 Ohm oder weniger aufweist.

18. Leitungsführungseinrichtung nach einem der Ansprüche 1 bis 17, **dadurch gekennzeichnet, dass** die Leitungsführungseinrichtung über im wesentlichen die Länge des mehrere Glieder miteinander verbinden durchgehendes Bodenteils oder über einen Abstand in Leitungsführungslängsrichtung zwischen zwei benachbarten geerdeten oder mit einer Erdungseinrichtung versehenen Gliedern, die vorzugsweise über ein durchgehendes Bodenteil miteinander verbunden sind, oder über die gesamte Länge der Leitungsführungseinrichtung einen elektrischen Oberflächenwiderstand Rₛ oder einen End-zu-End-Widerstand Rₑ oder einen Punkt-zu-Punkt-Widerstand Rₚ von ≤ 1 x 10¹⁰ Ohm aufweist.

19. Leitungsführungseinrichtung nach einem der Ansprüche 1 bis 18, **dadurch gekennzeichnet, dass** die Leitungsführungseinrichtung über im wesentlichen die Länge des mehrere Glieder miteinander verbinden durchgehendes Bodenteils oder über einen Abstand in Leitungsführungslängsrichtung zwischen zwei benachbarten geerdeten oder mit einer Erdungseinrichtung versehenen Gliedern, die vorzugsweise über ein durchgehendes Bodenteil miteinander verbunden sind, oder über die gesamte Länge der Leitungsführungseinrichtung einen elektrischen Widerstand von R_{g} ≤ 1 x 10¹² Ohm zu einem mit der Leitungsführungseinrichtung verbundenen EPA-Erdungspunkt oder einer mit der Leitungsführungseinrichtung verbundenen EPA-Erdungseinrichtung aufweist.

## Claims

1. Line guide device for guiding lines, comprising a plurality of links (2) connected to each other in articulated fashion, where at least some, or all, of the links (2) each display a bottom element (3), opposite side walls (4) and at least one cover element (5a, 5b), forming a duct (6) for accommodating lines, where the plurality of links (2) are integrally moulded on one another in one piece, forming a continuous strand, and where the line guide device (1) can be arranged to form a lower run (7), a curved section (8) and an upper run (9), where the bottom element (3) and both opposite side walls (4) of the links are designed in one piece as U-sections that are essentially rigid under the intended loads, and where the cover element (5a, 5b, 40, 83) of the respective link is integrally moulded on at least one side wall (4) of said link and designed to be moveable relative to the side wall, and can be moved into a position closing the link and a position at least essentially releasing the area between the opposite side walls, **characterised in that** mutually corresponding stops of adjacent links are provided, which interact in the straight position and/or curved position of the line guide device and are in each case located on the cover elements (5a, 5b) of the adjacent links and/or are provided by overlapping areas of adjacent links in the form of tabs (47), which are integrally moulded in one piece on the side walls (4) and/or cover elements (5) of at least some links and, starting from a first position, can be moved into a second position, in which they overlap a partial area of an adjacent link.

2. Line guide device according to Claim 1, **characterised in that** the line guide device (1) is manufactured as a one-piece plastic part.

3. Line guide device according to Claim 1 or 2, **characterised in that** a closing means (13), integrally moulded in one piece, is provided on the cover element (5a, 5b), being connectable in detachable fashion to a corresponding closing means (13a) to form a line guide device that is closed on the cover side, where the corresponding closing means is located on the side wall (4) of the respective link, or **in that** the cover element is of two-part design and the closing element is integrally moulded in one piece on the cover element part of the respective link opposite the first cover element part.

4. Line guide device according to one of Claims 1 to 3, **characterised in that** adjacent links (2) are provided with stops (19, 20) that correspond to each other and come into contact with each other when the line guide device (1) is in the straight position, and **in that** at least one of the corresponding stops of adjacent links is provided on a cover element (5a, 5b) and/or on the inner sides of the side walls (4) facing towards the duct (6) and/or the outer sides of the side walls (4) facing away from the duct and/or the upper side of the side wall facing away from the bottom element (3) of the link.

5. Line guide device according to one of Claims 1 to 4, **characterised in that** the stop (19) is designed as an area of the cover element which, in the straight position of the line guide device, projects onto the adjacent link (2) and, in stop position, engages a recess provided with a stop in a cover element and/or a side wall of the adjacent link.

6. Line guide device according to one of Claims 1 to 5, **characterised in that** the cover elements (5) of the line guide device are designed in such a way that they provide a closed upper side of the line guide device in the straight position of the line guide device.

7. Line guide device according to one of Claims 1 to 6, **characterised in that** the cover elements (5) of the line guide device are designed in such a way that they also provide a closed upper side of the line guide device in the curved position of the line guide device.

8. Line guide device according to one of Claims 1 to 7, **characterised in that** at least some cover elements (5) of the links are provided with at least one integrally moulded projecting area (17), which forms overlapping areas (15, 17) with at least one of the respectively adjacent links in the straight and/or curved position of the line guide device, and **in that** stop elements (19, 22) acting in stop position are located on the overlapping areas of the respectively adjacent links.

9. Line guide device according to one of Claims 1 to 8, **characterised in that** at least some cover elements (5) are provided on both sides with integrally moulded projecting areas (15), which project towards both adjacent links and in each case overlap the cover element of the adjacent links, or projecting areas (17) projecting from the adjacent cover elements towards the respective link.

10. Line guide device according to one of Claims 1 to 9, **characterised in that** the stop is designed as a peg (22) projecting from the respectively overlapping area transverse to the longitudinal direction of the line guide device, and **in that** the respectively corresponding stop displays a recess (23) receiving the peg, in which the peg (22) is accommodated over at least part, or all, of the pivoting movement of adjacent links relative to each other.

11. Line guide device according to one of Claims 1 to 10, **characterised in that**, in the straight position of the line guide device (1), the face ends (12) of the side walls (4) of respectively adjacent links that face each other are spaced apart from each other, at least over part, or all, of their height.

12. Line guide device according to one of Claims 1 to 11, **characterised in that** the bottom element (3) and/or the side wall (4) of at least one, or both, of the respectively adjacent links is provided with a projection (101), which projects onto the adjacent link and, in the curved position of the line guide device, can be brought into contact with an opposite area (103) of the adjacent link.

13. Line guide device according to one of Claims 1 to 12, **characterised in that** fastening elements (25, 25a, 25b) corresponding to each other are integrally moulded in one piece on the ends of the line guide device, by means of which the line guide device can be assembled to a line guide device of identical design, extending the length of the same.

14. Line guide device according to Claim 13, **characterised in that** at least one fastening element is provided on one end thereof, and corresponding fastening elements are provided on several or all links (2) of the line guide device, these being connectable to each other, at least after adjusting the length of the line guide device.

15. Line guide device according to one of Claims 1 to 14, **characterised in that**, on at least some links, at least one dividing web (30a) is provided between opposite side walls of the link, which acts as a partition for the interior space and is connected to the bottom element (3) in one piece.

16. Line guide device according to one of Claims 1 to 15, **characterised in that** at least some cover elements (5) of the links engage at least one, or both, of the adjacent links and are located with an area (15) between opposite side walls of the respectively adjacent link, and **in that** the area located between the side walls (4) displays a width essentially corresponding to the distance between the side walls (4).

17. Line guide device according to one of Claims 1 to 16, **characterised in that** the line guide device displays, over at least essentially the length of the bottom element interconnecting several links, or over a distance in the longitudinal direction of the line guide device between two adjacent links that are earthed or provided with an earthing device, which are preferably connected to each other via a continuous bottom element, or over the full length of the line guide device, an electrical resistance R of approx. 20,000 ohms or less.

18. Line guide device according to one of Claims 1 to 17, **characterised in that** the line guide device displays, over at least essentially the length of the continuous bottom element interconnecting several links, or over a distance in the longitudinal direction of the line guide device between two adjacent links that are earthed or provided with an earthing device, which are preferably connected to each other via a continuous bottom element, or over the full length of the line guide device, an electrical surface resistance Rₛ or an end-to-end resistance Rₑ or a point-to-point resistance Rₚ of ≤ 1 x 10¹⁰ ohms.

19. Line guide device according to one of Claims 1 to 18, **characterised in that** the line guide device displays, over at least essentially the length of the continuous bottom element interconnecting several links, or over a distance in the longitudinal direction of the line guide device between two adjacent links that are earthed or provided with an earthing device, which are preferably connected to each other via a continuous bottom element, or over the full length of the line guide device, an electrical resistance of R_{g} ≤ 1 x 10¹² ohms to an EPA earthing point connected to the line guide device, or to an EPA earthing device connected to the line guide device.

## Revendications

1. Dispositif de guidage de conduites destiné au guidage de conduites, constitué d'une pluralité d'éléments (2) raccordés les uns aux autres de manière articulée dans lequel au moins certains ou la totalité des éléments (2) présentent respectivement une partie fond (3), des parois latérales opposées (4) et au moins un élément de recouvrement (5a, 5b) en formant un canal (6) pour recevoir des conduites, ces éléments (2) étant formés de manière adjacente pour créer, d'une seule pièce, une ligne continue et le dispositif de guidage de conduites (1) pouvant être agencé de manière à présenter un brin inférieur (7), une zone de changement de direction (8) et un brin supérieur (9), la partie fond (3) et les deux parois latérales opposées (4) des éléments étant constituées d'une seule pièce et se présentant sous la forme de profilés en U essentiellement rigides sous une contrainte appropriée, et l'élément de recouvrement (5a, 5b, 40, 83) de chaque élément étant formé sur au moins une paroi latérale (4) de ce dernier et étant réalisé mobile par rapport à la paroi latérale et pouvant passer d'une position fermant l'élément, à une position libérant au moins essentiellement la zone entre les parois latérales opposées, **caractérisé en ce que** sont prévues des butées correspondant les unes avec les autres d'éléments adjacents qui concourent dans la position droite et/ou la position courbe du dispositif de guidage de conduites, et qui sont disposées respectivement au niveau des éléments de recouvrement (5a, 5b) d'éléments adjacents et/ou qui sont mises à disposition par la zone de superposition des éléments adjacents sous forme d'éclisses (47), formées d'une seule pièce au niveau des parois latérales (4) et/ou des éléments de recouvrement (5) d'au moins quelques éléments et pouvant passer en partant d'une première position à une deuxième position dans laquelle elles chevauchent une zone partielle d'un élément adjacent.

2. Dispositif de guidage de conduites selon la revendication 1, **caractérisé en ce que** le dispositif de guidage de conduites (1) est fabriqué en tant que pièce en matière plastique monobloc.

3. Dispositif de guidage de conduites selon la revendication 1 ou 2, **caractérisé en ce qu'**il est prévu au niveau de l'élément de recouvrement (5a, 5b) un moyen de fermeture (13) d'une seule pièce, lequel peut être relié de façon détachable à un moyen de fermeture correspondant (13a) en créant un dispositif de guidage de conduites fermé côté recouvrement, sachant que le moyen de fermeture correspondant est disposé au niveau de la paroi latérale (4) de l'élément respectif ou en ce que l'élément de recouvrement est réalisé en deux parties et que l'élément de fermeture est réalisé d'une seule pièce au niveau de la partie de l'élément de recouvrement, opposée à la première partie de l'élément de recouvrement, de l'élément respectif.

4. Dispositif de guidage de conduites selon l'une quelconque des revendications 1 à 3, **caractérisé en ce que** sont prévues, au niveau des éléments adjacents (2), des butées (19, 20) correspondant les unes avec les autres et venant se positionner ensemble, lorsque le dispositif de guidage de conduites (1) est dans la position droite et **en ce qu'**au moins une des butées, en correspondance, d'éléments adjacents est prévue au niveau d'un élément de recouvrement (5a, 5b) et/ou qu'elles sont disposées au niveau des côtés intérieurs orientés vers le canal (6) et/ou des côtés extérieurs, éloignés du canal, des parois latérales (4) et/ou du côté supérieur, éloigné de la partie fond (3) de l'élément, de la paroi latérale.

5. Dispositif de guidage de conduites selon l'une quelconque des revendications 1 à 4, **caractérisé en ce que** la butée (19) est réalisée en tant qu'une zone de l'élément de recouvrement, débordant sur l'élément (2) adjacent, le dispositif de guidage de conduites en position droite, et pénétrant, en position de butée, dans un évidement, muni d'une butée, d'un élément de recouvrement et/ou d'une paroi latérale de l'élément adjacent.

6. Dispositif de guidage de conduites selon l'une quelconque des revendications 1 à 5, **caractérisé en ce que** les éléments de recouvrement (5) du dispositif de guidage de conduites sont conçus de telle sorte que, dans la position droite de celui-ci, ils mettent à disposition un côté supérieur fermé dudit dispositif.

7. Dispositif de guidage de conduites selon l'une quelconque des revendications 1 à 6, **caractérisé en ce que** les éléments de recouvrement (5) du dispositif de guidage de conduites sont conçus de telle sorte que, dans la position courbe de celui-ci, ils offrent également un côté supérieur fermé dudit dispositif.

8. Dispositif de guidage de conduites selon l'une quelconque des revendications 1 à 7, **caractérisé en ce qu'**à chaque fois, au moins une zone en saillie (17) est formée au moins sur quelques éléments de recouvrement (5) d'éléments, ladite zone formant avec au moins un des éléments à chaque fois adjacents, des zones de superposition (15, 17), dans la position droite et/ou courbe du dispositif de guidage de conduites, et **en ce que** sont disposés, au niveau des zones de superposition des éléments à chaque fois adjacents, des éléments de butée (19, 22) agissant en position de butée.

9. Dispositif de guidage de conduites selon l'une quelconque des revendications 1 à 8, **caractérisé en ce que** des zones (15) débordant de part et d'autre en direction des deux éléments adjacents et en superposition à chaque fois avec l'élément de recouvrement des éléments adjacents ou avec des zones (17) en saillie des éléments de recouvrement adjacents en direction de l'élément respectif, sont réalisées au moins sur quelques éléments de recouvrement (5).

10. Dispositif de guidage de conduites selon l'une quelconque des revendications 1 à 9, **caractérisé en ce que** la butée est réalisée en tant qu'axe (22) en saillie de la zone de superposition en question, transversalement au sens longitudinal du dispositif de guidage de conduites et **en ce que** la butée correspondante concernée, présente un évidement (23) recevant l'axe dans lequel l'axe (22) est logé sur au moins une partie ou la totalité du mouvement de pivotement des éléments adjacents.

11. Dispositif de guidage de conduites selon l'une quelconque des revendications 1 à 10, **caractérisé en ce que**, dans la position droite du dispositif de guidage de conduites (1), les parois latérales (4) des éléments respectivement adjacents sont, avec leurs côtés frontaux (12) s'affectant les uns aux autres, espacées les unes des autres au moins sur une partie ou la totalité de leur hauteur.

12. Dispositif de guidage de conduites selon l'une quelconque des revendications 1 à 11, **caractérisé en ce qu'**il est prévu, au niveau de la partie fond (3) et/ou de la paroi latérale (4), au moins d'un ou de deux éléments à chaque fois adjacents, une saillie (101) dépassant sur l'élément adjacent et pouvant être mise en contact avec une zone opposée (103) de l'élément adjacent, dans la position courbe du dispositif de guidage de conduites.

13. Dispositif de guidage de conduites selon l'une quelconque des revendications 1 à 12, **caractérisé en ce que** des éléments de fixation (25, 25a, 25b) correspondant les uns avec les autres sont formés d'une seule pièce au niveau des extrémités du dispositif de guidage de conduites, avec lesquels ce dernier peut être réuni avec un dispositif de guidage de conduites de construction similaire en prolongeant celui-ci.

14. Dispositif de guidage de conduites selon la revendication 13, **caractérisé en ce qu'**au niveau d'une extrémité de celui-ci, il est prévu au moins un élément de fixation et au niveau de plusieurs ou de l'ensemble des éléments (2) du dispositif de guidage de conduites, des éléments de fixation en correspondance qui peuvent être reliés ensemble au moins après mise à longueur du dispositif de guidage de conduites.

15. Dispositif de guidage de conduites selon l'une quelconque des revendications 1 à 14, **caractérisé en ce qu'**au niveau d'au moins quelques éléments entre les parois latérales opposées de l'élément, il est prévu au moins une nervure séparatrice (30a) en tant que partage de l'espace intérieur qui est reliée d'un seul tenant avec la partie fond (3).

16. Dispositif de guidage de conduites selon l'une quelconque des revendications 1 à 15, **caractérisé en ce qu'**au moins quelques éléments de recouvrement (5) des éléments pénètrent dans au moins un ou deux éléments adjacents et sont placés avec une zone (15) entre des parois latérales voisines de l'élément adjacent respectif et **en ce que** la zone entre les parois latérales (4) présente une largeur correspondant essentiellement à l'espacement des parois latérales (4).

17. Dispositif de guidage de conduites selon l'une quelconque des revendications 1 à 16, **caractérisé en ce que** le dispositif de guidage de conduites présente une résistance électrique R d'environ 20 000 Ohms ou moins sur essentiellement la longueur de la partie fond reliant ensemble plusieurs éléments ou sur un espace dans le dispositif de guidage de conduites entre deux éléments adjacents mis à la terre ou munis d'un dispositif de mise à la terre et reliés ensemble de préférence sur une partie fond continue ou sur toute la longueur du dispositif de guidage de conduites.

18. Dispositif de guidage de conduites selon l'une quelconque des revendications 1 à 17, **caractérisé en ce que** le dispositif de guidage de conduites présente une résistance électrique en surface Rₛ ou une résistance de bout en bout Rₑ ou une résistance point à point Rₚ ≤ 1 x 10¹⁰ Ohms sur essentiellement la longueur de la partie fond continue reliant ensemble plusieurs éléments ou sur un espace dans le dispositif de guidage de conduites entre deux éléments adjacents mis à la terre ou munis d'un dispositif de mise à la terre et reliés ensemble de préférence sur une partie fond continue ou sur toute la longueur du dispositif de guidage de conduites.

19. Dispositif de guidage de conduites selon l'une quelconque des revendications 1 à 18, **caractérisé en ce que** le dispositif de guidage de conduites présente une résistance électrique de R_{g} ≤ 1 x 10¹² Ohms pour un point de mise à la terre EPA relié au dispositif de guidage de conduites ou à un dispositif de mise à la terre EPA relié au dispositif de guidage de conduites, sur essentiellement la longueur de la partie fond continue reliant ensemble plusieurs éléments ou sur un espace dans le dispositif de guidage de conduites entre deux éléments adjacents mis à la terre ou munis d'un dispositif de mise à la terre et reliés ensemble de préférence sur une partie fond continue ou sur toute la longueur du dispositif de guidage de conduites.
